# FASCICULE DE BREVET EUROPEEN

(11) **EP 4 059 469 B1**
(45) Date de publication et mention de la délivrance du brevet: **22.11.2023**
(21) Numéro de dépôt: 21162982.9
(22) Date de dépôt: 16.03.2021
(51) Int. Cl.: A61C 8/00

(54) **SOUS-ENSEMBLE DENTAIRE POUR LA RESTAURATION PROTHETIQUE UNITAIRE D'UNE DENT,COMPOSANT DENTAIRE ASSOCIE ET PROCEDE D'ASSEMBLAGE**
DENTALE UNTERGRUPPE FÜR DIE EINHEITLICHE PROTHETISCHE VERSORGUNG EINES ZAHNS, ZUGEHÖRIGE ZAHNBAUGRUPPE UND MONTAGEVERFAHREN
DENTAL SUBASSEMBLY FOR INDIVIDUAL PROSTHETIC RESTORATION OF A TOOTH, ASSOCIATED DENTAL ASSEMBLY AND ASSEMBLY METHOD

(43) Date de publication de la demande: 21.09.2022
(73) Titulaire: ANTHOGYR, 74700 Sallanches (FR)
(72) Inventeur: RICHARD, Hervé, 73590 NOTRE DAME DE BELLECOMBE (FR)
(74) Mandataire: Cabinet Poncet

(56) Documents cités:
- WO-A1-2018/138630
- WO-A1-2020/157045
- US-A1- 2001 044 095
- US-A1- 2011 076 644
- US-A1- 2017 224 447
- US-A1- 2019 365 510

## Description

### DOMAINE TECHNIQUE DE L'INVENTION

La présente invention concerne le domaine de la restauration dentaire, et concerne plus particulièrement :
- un sous-ensemble dentaire selon la revendication 1,
- un composant dentaire selon la revendication 10, et
- un un procédé d'assemblage ex-vivo du composant dentaire ci-dessus selon la revendication 16.

Dans le cadre de la restauration prothétique unitaire d'une dent, on a souvent recours à une prothèse transfixée, c'est-à-dire munie d'un passage traversant permettant la fixation (directe ou indirecte) de la prothèse par une vis de fixation (traversant la prothèse) à un implant dentaire qui est ostéointégré dans la mâchoire du patient.

On connaît différents types de prothèses transfixées :
- celles comportant une âme (métallique notamment) sur laquelle est opérée une stratification par le prothésiste en laissant ouvert le passage traversant (application d'un matériau en une ou plusieurs couches permettant de donner un aspect le plus proche d'une dent naturelle) ;
- celles comportant une âme en céramique (usinée à partir d'un bloc de céramique ou produite par frittage d'une poudre céramique notamment) éventuellement revêtue par le prothésiste d'une ou plusieurs couches très légères de texturation ou de coloration procurant un aspect le plus proche d'une dent naturelle.

En fonction de la position de l'implant dentaire fixé dans la mâchoire du patient, il est souvent nécessaire de régler avec soin l'emplacement de l'émergence coronaire du puit permettant le passage de la vis de fixation. Il s'agit en effet d'être en mesure, malgré le peu de place disponible dans la bouche du patient, d'accéder à la vis de fixation avec un outil de vissage. Il est en outre important que l'émergence coronaire du puit d'accès soit disposée à l'écart des parties actives de la dent lors de la mastication (cuspides ou bord libre).

Les documents EP 3 202 365 B1 et US 2017/0224447 A1 au nom du présent demandeur ont proposé une solution permettant de fixer sur un implant dentaire une prothèse dentaire transfixée comportant une âme sur laquelle est opérée une stratification ou comportant une âme en céramique, en autorisant le recours à un passage traversant angulé pour tenir compte des contraintes d'orientation de l'implant dentaire ostéointégré, d'accessibilité, et de préservation des parties actives de la dent, sans pour autant affaiblir inutilement la résistance mécanique de ladite prothèse dentaire transfixée.

Pour ce faire, il est enseigné de recourir à un deuxième élément pourvu d'ailettes longitudinales flexibles dont les extrémités libres sont destinées à être engagées dans une gorge annulaire ménagée dans un premier élément de type âme sur laquelle est opérée une stratification, ou de type âme en céramique.

Pour que le premier élément soit retenu sur le deuxième élément et pressé de façon satisfaisante contre le deuxième élément, il est nécessaire de fabriquer le premier élément avec une précision très élevée, en particulier en ce qui concerne la gorge et sa partie tronconique contre laquelle sont destinées à venir en appui les extrémités libres des d'ailettes longitudinales. La précision exigée est hélas si élevée qu'elle est le plus souvent incompatible avec les capacités de fabrication des machines généralement utilisées par les prothésistes dentaires pour réaliser le premier élément.

Par ailleurs, les prothésistes dentaires doivent s'assurer que le deuxième élément puisse à coup sûr être monté sur un premier élément. Cela implique de contrôler avec minutie la géométrie de la gorge et plus particulièrement de sa partie tronconique. Mais les prothésistes dentaires sont alors le plus souvent dépourvus des moyens de contrôle adaptés pour ce faire.

Les documents US 2019/0365510 A1 et WO 2018/138630 A1, également au nom du présent demandeur, proposent une solution alternative ayant recours à une pièce de fixation rapportée et fixée sur un implant dentaire. La pièce de fixation est expansible par vissage d'une vis dans l'implant dentaire, et son expansion permet la retenue sur l'implant dentaire d'un premier élément de type âme sur laquelle est opérée une stratification, ou de type âme en céramique.

Le document US 2001/0044095 A1 décrit un sous-ensemble dentaire selon le préambule de la revendication 1.

### EXPOSE DE L'INVENTION

Un problème proposé par la présente invention est de fournir une autre solution de fixation sur un implant dentaire d'une prothèse dentaire transfixée comportant une âme sur laquelle est opérée une stratification ou comportant une âme en céramique, autorisant le recours à un passage traversant angulé pour tenir compte des contraintes d'orientation de l'implant dentaire ostéointégré, d'accessibilité, et de préservation des parties actives de la dent, sans pour autant affaiblir inutilement la résistance mécanique de ladite prothèse dentaire transfixée.

Simultanément, l'invention vise à fournir une telle autre solution de fixation qui soit compatible avec les capacités de fabrication des machines généralement utilisées par les prothésistes dentaires pour réaliser le premier élément.

Pour atteindre ces objets ainsi que d'autres, cette divulgation propose en premier lieu un sous-ensemble dentaire pour la restauration prothétique unitaire d'une dent, conformé pour être reçu sur un implant dentaire, ledit sous-ensemble dentaire pouvant être assemblé avec un premier élément, de type âme sur laquelle est opérée une stratification, ou de type âme en céramique, ledit premier élément ayant un premier passage traversant comportant un premier tronçon de passage s'étendant depuis une extrémité proximale dudit premier élément selon un premier axe longitudinal, ledit premier élément comportant au moins un premier organe d'indexation en rotation et un premier organe de retenue axiale, ledit sous-ensemble dentaire comportant :
- un deuxième élément à deuxième passage traversant s'étendant selon un deuxième axe longitudinal, comportant une surface d'appui conformée pour pouvoir recevoir en appui axial l'extrémité proximale dudit premier élément, et comportant une extrémité proximale conformée pour pouvoir venir porter en appui axial contre ou conformée pour pouvoir venir pénétrer dans ledit implant dentaire,
- une première vis de fixation, comportant une tête de première vis depuis laquelle s'étend une tige de première vis apte à traverser le deuxième élément en étant reçue dans le deuxième passage traversant et munie d'un tronçon fileté conformé pour être reçu par vissage dans ledit implant dentaire, la tête de première vis étant dimensionnée de façon à permettre sa réception par pénétration axiale dans le premier tronçon de passage selon le premier axe longitudinal depuis l'extrémité proximale du premier élément,
- une bague conformée pour former un siège pour la tête de première vis et pour être rapportée dans ledit premier élément par pénétration axiale selon le premier axe longitudinal dans le premier tronçon de passage depuis l'extrémité proximale dudit premier élément jusque dans une position axiale prédéterminée dans laquelle des moyens de verrouillage peuvent s'opposer à la translation de la bague en direction de l'extrémité proximale dudit premier élément ;
selon la divulgation:
- ledit deuxième élément comporte au moins un deuxième organe d'indexation en rotation et un troisième organe d'indexation en rotation,
- la bague comporte au moins un quatrième organe d'indexation en rotation,
- les troisième et quatrième organes d'indexation en rotation sont conformés pour s'imbriquer mutuellement par interpénétration axiale selon le deuxième axe longitudinal lorsque le deuxième élément et la bague sont dans une orientation relative de pénétration l'un par rapport à l'autre autour du deuxième axe longitudinal, de sorte qu'en une position d'imbrication les troisième et quatrième organes d'indexation en rotation bloquent en rotation la bague par rapport au deuxième élément autour du deuxième axe longitudinal,
- les premier et deuxième organes d'indexation en rotation sont conformés pour s'imbriquer mutuellement par interpénétration axiale selon le deuxième axe longitudinal lorsque ledit premier élément et le deuxième élément sont dans une orientation relative de pénétration l'un par rapport à l'autre autour du deuxième axe longitudinal, de sorte qu'en une position d'imbrication les premier et deuxième organes d'indexation en rotation bloquent en rotation ledit premier élément par rapport au deuxième élément autour du deuxième axe longitudinal,
- dans sa position axiale prédéterminée, la bague peut être pivotée autour du premier axe longitudinal jusqu'en une orientation de verrouillage dans laquelle le premier organe de retenue axiale s'oppose à la translation de la bague en direction de l'extrémité proximale dudit premier élément.

Un tel sous-ensemble exige une précision de fabrication du premier élément qui est bien moins élevée que celle nécessaire pour réaliser le premier élément décrit dans le brevet européen EP 3 202 365 B1. La plupart des machines généralement utilisées par les prothésistes dentaires sont ainsi utilisables pour fabriquer ce premier élément.

Avantageusement, on peut prévoir que, lorsque la bague n'est pas dans ladite au moins une orientation angulaire de verrouillage, les premier, deuxième, troisième et quatrième organes d'indexation forment des butées axiales empêchant que la surface d'appui du deuxième élément vienne en appui axial contre l'extrémité proximale dudit premier élément.

On est ainsi assuré, de façon simple et aisément perceptible, que la bague (qui est engagée dans le premier élément, donc peu voire pas visible) est bien dans une orientation angulaire de verrouillage dans le premier élément dès lors que la surface d'appui du deuxième élément est en appui axial contre l'extrémité proximale du premier élément.

De préférence, des premiers moyens de frottement peuvent permettre d'emmancher le deuxième élément dans ledit premier élément selon un emmanchement à friction freinant une translation du deuxième élément à l'écart dudit premier élément selon le premier axe longitudinal.

L'emmanchement à friction permet de limiter les risques de séparation intempestive du deuxième élément et du premier élément, et les risques de perte ou d'avalement de ce dernier par le patient, avant la fixation sur l'implant.

Pour faciliter les manipulations du praticien et limiter encore les risques de perte intempestive, la bague peut avantageusement être montée captive sur la tige de première vis.

De préférence, les troisième et quatrième organes d'indexation en rotation peuvent comprendre :
- sur l'un de la bague ou du deuxième élément, au moins une ailette longitudinale,
- sur l'autre de la bague ou du deuxième élément, un tronçon cylindrique à paroi latérale tubulaire dans laquelle est ménagée au moins une fente longitudinale apte à recevoir ladite au moins une ailette longitudinale.

Les troisième et quatrième organes d'indexation en rotation ont ainsi une structure simple et compatible avec une imbrication mutuelle par interpénétration axiale.

Avantageusement, ledit au moins un deuxième organe d'indexation en rotation peut comprendre une saillie radiale en périphérie d'un tronçon cylindrique du deuxième élément, ladite saillie radiale pouvant s'engager dans le premier organe d'indexation en rotation, qui est lui-même sous forme d'une rainure longitudinale ménagée dans la paroi latérale du premier tronçon de passage dudit premier élément, lorsque la surface d'appui du deuxième élément reçoit en appui axial l'extrémité proximale dudit premier élément.

Les premier et deuxième organes d'indexation en rotation ont ainsi une structure simple et compatible avec une imbrication mutuelle par interpénétration axiale.

De préférence, on peut prévoir que :
- la bague comprend une excroissance radiale en périphérie de la bague, ladite excroissance radiale pouvant porter contre le premier organe de retenue axiale, qui est lui-même en forme d'épaulement dans le premier tronçon de passage dudit premier élément, lorsque la bague est en orientation de verrouillage,
- ladite excroissance radiale est conformée pour pouvoir coulisser axialement dans ladite rainure longitudinale lors de la pénétration axiale de la bague dans le premier tronçon de passage dudit premier élément.

Pour son engagement dans le premier élément, la bague à excroissance radiale coopère ainsi astucieusement avec la structure du premier organe d'indexation en rotation, ce qui permet une réalisation efficace et compacte. Ladite excroissance radiale et le premier organe de retenue axiale coopèrent de façon semblable à un système de verrouillage à baïonnettes, et sont donc intuitifs à utiliser.

Avantageusement, sur ledit deuxième élément, ladite saillie radiale et ladite fente ou ailette longitudinale peuvent être décalées angulairement l'une par rapport à l'autre autour du deuxième axe longitudinal.

De préférence, la bague peut comporter des deuxièmes moyens de frottement qui, lorsque la bague est en orientation de verrouillage, sont aptes à freiner une rotation de la bague par rapport au premier élément autour du premier axe longitudinal. Les deuxièmes moyens de frottement contribuent ainsi à stabiliser et maintenir la bague en orientation de verrouillage avant que le praticien assemble le deuxième élément et le premier élément.

Avantageusement, le deuxième passage traversant du deuxième élément peut comporter :
- un siège pour la tête d'une deuxième vis apte à traverser le deuxième élément en étant reçue dans le deuxième passage traversant pour se visser dans l'implant dentaire,
- un filetage intérieur distal apte à recevoir une troisième vis permettant la fixation sur le deuxième élément d'un élément transfixé provisoire.

Le filetage intérieur distal et la troisième vis permettent de fixer et enlever, sur le deuxième élément, au moins un élément transfixé provisoire tel que par exemple :
- une pièce de cicatrisation dont la paroi latérale est conformée pour venir au moins en partie au contact de la gencive, et/ou
- une pièce de prise d'empreinte conformée pour être scannée intra oralement et/ou surmoulée dans une pâte de prise d'empreinte, et/ou
- une prothèse dentaire provisoire.

Le deuxième élément peut ainsi rester fixé à l'implant depuis la cicatrisation jusqu'à la restauration finale par fixation du premier élément. Les tissus mous (gencives) du patient peuvent ainsi revenir se former tout autour du deuxième élément et au-dessus de l'implant dentaire sans être perturbés : une fois le deuxième élément rapporté et fixé sur l'implant dentaire (et ce dès la pose de l'implant dentaire de préférence), il n'y a plus besoin de le retirer, de sorte que l'attache des tissus conjonctifs n'est pas troublée et conduit à une meilleure stabilité des tissus mous. Cela contribue également à réduire le risque de perte osseuse verticale, la gencive venant bien en contact étanche tout autour du deuxième élément.

Pour assurer une appréhension fiable de l'orientation de l'implant et de l'orientation qu'aura au final le premier élément, l'élément transfixé provisoire peut de préférence être indexé en rotation sur le deuxième élément.

Cette divulgation propose en deuxième lieu un premier élément pour la restauration prothétique unitaire d'une dent, de type âme sur laquelle est opérée une stratification, ou de type âme en céramique, ledit premier élément ayant un premier passage traversant comportant un premier tronçon de passage s'étendant depuis une extrémité proximale dudit premier élément selon un premier axe longitudinal, ledit premier élément comportant un premier organe de retenue axiale,
ledit premier élément pouvant être assemblé avec un sous-ensemble dentaire qui est lui-même conformé pour être reçu sur un implant dentaire et qui comporte :
- un deuxième élément à deuxième passage traversant s'étendant selon un deuxième axe longitudinal, comportant une surface d'appui conformée pour pouvoir recevoir en appui axial l'extrémité proximale dudit premier élément, et comportant une extrémité proximale conformée pour pouvoir venir porter en appui axial contre ou conformée pour pouvoir venir pénétrer dans ledit implant dentaire,
- une première vis de fixation, comportant une tête de première vis depuis laquelle s'étend une tige de première vis apte à traverser le deuxième élément en étant reçue dans le deuxième passage traversant et munie d'un tronçon fileté conformé pour être reçu par vissage dans ledit implant dentaire, le premier tronçon de passage du premier élément étant dimensionné de façon à permettre la réception de la tête de première vis par pénétration axiale selon le premier axe longitudinal depuis l'extrémité proximale du premier élément,
- une bague conformée pour former un siège pour la tête de première vis et pour être rapportée dans ledit premier élément par pénétration axiale selon le premier axe longitudinal dans le premier tronçon de passage depuis l'extrémité proximale dudit premier élément jusque dans une position axiale prédéterminée dans laquelle des moyens de verrouillage peuvent s'opposer à la translation de la bague en direction de l'extrémité proximale dudit premier élément,
- ledit deuxième élément comportant au moins un deuxième organe d'indexation en rotation et un troisième organe d'indexation en rotation,
- la bague comportant au moins un quatrième organe d'indexation en rotation,
- les troisième et quatrième organes d'indexation en rotation étant conformés pour s'imbriquer mutuellement par interpénétration axiale selon le deuxième axe longitudinal lorsque le deuxième élément et la bague sont dans une orientation relative de pénétration l'un par rapport à l'autre autour du deuxième axe longitudinal, de sorte qu'en une position d'imbrication les troisième et quatrième organes d'indexation en rotation bloquent en rotation la bague par rapport au deuxième élément autour du deuxième axe longitudinal ;
selon la divulgation:
- ledit premier élément comporte au moins un premier organe d'indexation en rotation,
- les premier et deuxième organes d'indexation en rotation sont conformés pour s'imbriquer mutuellement par interpénétration axiale selon le deuxième axe longitudinal lorsque ledit premier élément et le deuxième élément sont dans une orientation relative de pénétration l'un par rapport à l'autre autour du deuxième axe longitudinal, de sorte qu'en une position d'imbrication les premier et deuxième organes d'indexation en rotation bloquent en rotation ledit premier élément par rapport au deuxième élément autour du deuxième axe longitudinal,
- le premier tronçon de passage dudit premier élément est conformé pour que la bague, dans sa position axiale prédéterminée, puisse être pivotée autour du premier axe longitudinal jusqu'en une orientation de verrouillage dans laquelle le premier organe de retenue axiale s'oppose à la translation de la bague en direction de l'extrémité proximale dudit premier élément.

Un tel premier élément exige une précision de fabrication bien moins élevée que celle nécessaire pour réaliser le premier élément décrit dans le brevet européen EP 3 202 365 B1, de sorte que la plupart des machines généralement utilisées par les prothésistes dentaires sont ainsi utilisables pour fabriquer ce premier élément. En effet, la position axiale prédéterminée de la bague dans le premier élément, assuré par le premier organe de retenue axiale, n'a pas besoin d'être rigoureusement précise selon le premier axe longitudinal : de légères variations de cette position axiale peuvent aisément être rattrapées par un vissage plus ou moins important de la première vis de fixation dans l'implant, jusqu'à amener l'extrémité proximale du premier élément en appui axial contre la surface d'appui du deuxième élément.

Avantageusement, lorsque la bague n'est pas dans ladite au moins une orientation angulaire de verrouillage, les premier, deuxième, troisième et quatrième organes d'indexation peuvent former des butées axiales empêchant que la surface d'appui du deuxième élément vienne en appui axial contre l'extrémité proximale dudit premier élément.

On est ainsi assuré de façon simple et aisément perceptible que la bague (qui est engagée dans le premier élément, donc peu voire pas visible) est bien dans une orientation angulaire de verrouillage dans le premier élément dès lors que la surface d'appui du deuxième élément est en appui axial contre l'extrémité proximale dudit premier élément.

De préférence, des premiers moyens de frottement peuvent permettre d'emmancher le deuxième élément dans ledit premier élément selon un emmanchement à friction freinant une translation du deuxième élément à l'écart dudit premier élément selon le premier axe longitudinal.

L'emmanchement à friction permet de limiter les risques de séparation intempestive du deuxième élément et du premier élément, et les risques de perte ou d'avalement de ce dernier par le patient, avant la fixation sur l'implant.

Avantageusement, ledit premier organe d'indexation en rotation est sous forme d'une rainure longitudinale, ménagée dans la paroi latérale du premier tronçon de passage dudit premier élément, et dans laquelle peut s'engager une saillie radiale formant le deuxième organe d'indexation en rotation du deuxième élément lorsque la surface d'appui du deuxième élément reçoit en appui axial l'extrémité proximale dudit premier élément.

Les premier et deuxième organes d'indexation en rotation ont ainsi une structure simple et compatible avec une imbrication mutuelle par interpénétration axiale.

De préférence, on peut prévoir que :
- le premier organe de retenue axiale est en forme d'épaulement dans le premier tronçon de passage dudit premier élément,
- la bague comprend une excroissance radiale en périphérie de la bague, ladite excroissance radiale pouvant porter contre l'épaulement lorsque la bague est en orientation de verrouillage.

Ladite excroissance radiale et le premier organe de retenue axiale coopèrent de façon semblable à un système de verrouillage à baïonnettes, et sont donc intuitifs à utiliser.

Par ailleurs, un premier organe de retenue axiale en forme d'épaulement est facile à fabriquer par la plupart des machines généralement utilisées par les prothésistes dentaires, et le contrôle de sa bonne forme peut être réalisé avec des moyens de contrôle très simples (une simple tige montée sur un plan de support et pourvue à son extrémité libre d'un épanouissement radial apte à venir en appui contre l'épaulement peut suffire).

Avantageusement, le premier passage traversant comporte en outre un deuxième tronçon de passage, ledit deuxième tronçon de passage prolongeant en oblique le premier tronçon de passage de telle sorte que les premier et deuxième tronçons de passage forment entre eux un angle non nul.

Un tel angle permet de régler avec soin l'emplacement de l'émergence coronaire du deuxième tronçon de passage permettant le passage d'un outil de vissage, en s'assurant que ladite émergence coronaire du deuxième tronçon de passage soit disposée à l'écart des parties actives de la dent lors de la mastication (cuspides ou bord libre). Pour entraîner en rotation la première vis de fixation, on peut par exemple avoir recours à l'utilisation d'un outil permettant une angulation avec la tête de vis lors d'un vissage ou dévissage, comme décrit par exemple dans le document EP 2 607 722 A1.

Selon un autre aspect de la présente invention, il est proposé un composant dentaire comprenant :
- un sous-ensemble dentaire tel que précédemment décrit, et
- un premier élément tel que précédemment décrit.

Selon encore un autre aspect de la présente invention, il est proposé un procédé d'assemblage préliminaire ex-vivo en vue de l'assemblage subséquent d'un tel composant dentaire, comprenant les étapes suivantes :
a) insérer la tige de la première vis dans la bague,
b) insérer dans le premier tronçon de passage la bague et la tête de première vis par un mouvement de translation axiale selon le premier axe longitudinal depuis l'extrémité proximale du premier élément, jusqu'à faire parvenir la bague dans la position axiale prédéterminée,
c) faire pivoter la bague autour du premier axe longitudinal pour l'amener en orientation de verrouillage.

On peut ensuite manipuler d'une seule pièce et rapporter l'assemblage préliminaire en résultant (formé par la vis, la bague et le premier élément) sur le deuxième élément présent en bouche du patient et autour duquel les tissus conjonctifs se sont préalablement formés avec une bonne accroche. On solidarise ensuite le composant dentaire en vissant la vis dans l'implant dentaire : la tête de vis exerce un effort de traction sur le premier élément (via la bague formant un siège de vis dans ledit premier élément) pour le fixer de façon fiable sur le deuxième élément, avec l'extrémité proximale du premier élément en appui contre la surface d'appui du deuxième élément.

En alternative, on peut ensuite manipuler d'une seule pièce et rapporter l'assemblage préliminaire en résultant (formé par la vis, la bague et le premier élément) sur un deuxième élément se trouvant hors de la bouche du patient. On rapporte alors le deuxième élément sur l'extrémité proximale du premier élément en engageant la tige de première vis dans le deuxième passage traversant jusqu'à amener la surface d'appui du deuxième élément en appui contre l'extrémité proximale du premier élément.

### DESCRIPTION SOMMAIRE DES DESSINS

D'autres objets, caractéristiques et avantages de la présente invention ressortiront de la description suivante de modes de réalisation particuliers, faite en relation avec les figures jointes, parmi lesquelles :
[Fig. 1] La figure 1 est une vue de côté en coupe partielle d'un sous-ensemble dentaire selon un mode de réalisation particulier de la présente invention, ledit sous-ensemble comprenant un deuxième élément, une bague et une vis ;
[Fig.2] La figure 2 est une vue en perspective du deuxième élément du sous-ensemble de la figure 1 ;
[Fig.3] La figure 3 est une vue de dessus du deuxième élément du sous-ensemble de la figure 1 ;
[Fig.4] La figure 4 est une vue en perspective de la bague du sous-ensemble de la figure 1 ;
[Fig.5] La figure 5 est une vue de dessous de la bague du sous-ensemble de la figure 1 ;
[Fig.6] La figure 6 est une vue de côté et en coupe de la bague du sous-ensemble de la figure 1 ;
[Fig.7] La figure 7 est une vue de derrière d'un premier élément destiné à être assemblé avec un sous-ensemble dentaire selon la présente invention ;
[Fig.8] La figure 8 est une vue de côté du premier élément de la figure 7 ;
[Fig.9] La figure 9 est une vue de côté et en coupe du premier élément de la figure 7 ;
[Fig.10] La figure 10 est une première vue en coupe transversale du premier élément de la figure 7 ;
[Fig.11] La figure 11 est une deuxième vue en coupe transversale du premier élément de la figure 7 ;
[Fig.12] La figure 12 est une vue en perspective d'une étape de réalisation d'un assemblage préliminaire comportant la vis de la figure 1, la bague de la figure 4 et le premier élément de la figure 7 ;
[Fig.13] La figure 13 est une vue en perspective d'une étape ultérieure de réalisation de l'assemblage préliminaire de la figure 12 ;
[Fig.14] La figure 14 est une vue en perspective de l'assemblage d'un composant dentaire selon un mode de réalisation particulier de la présente invention ;
[Fig.15] La figure 15 est une vue de côté d'une partie du composant dentaire de la figure 14 en cours d'assemblage ;
[Fig.16] La figure 16 est une vue de côté du composant dentaire de la figure 14 après assemblage ;
[Fig.17] La figure 17 est une autre vue de côté d'une partie du composant dentaire de la figure 14 en cours d'assemblage ;
[Fig.18] La figure 18 est une autre vue en perspective de l'assemblage du composant dentaire de la figure 16 sur un implant dentaire ;
[Fig.19] La figure 19 est une vue en coupe longitudinale du composant dentaire de la figure 16 fixé sur un implant dentaire ;
[Fig.20] La figure 20 est une vue en perspective montrant la fixation d'une pièce de cicatrisation sur un implant dentaire par l'intermédiaire du deuxième élément de la figure 2 ;
[Fig.21] La figure 21 est une vue de côté de la figure 20 ;
[Fig.22] La figure 22 est une vue en perspective montrant la fixation d'un corps de pilier provisoire destiné à être utilisé pour former une prothèse dentaire provisoire sur un implant dentaire par l'intermédiaire du deuxième élément de la figure 2 ; et
[Fig.23] La figure 23 est une vue de côté de la figure 22.

### DESCRIPTION DES MODES DE REALISATION PREFERES

Lorsque des références numériques identiques sont utilisées dans plusieurs figures, variantes ou modes de réalisation de l'invention, ces références numériques désignent des éléments identiques ou similaires dans chacune des figures, chacune des variantes ou chacun des modes de réalisation.

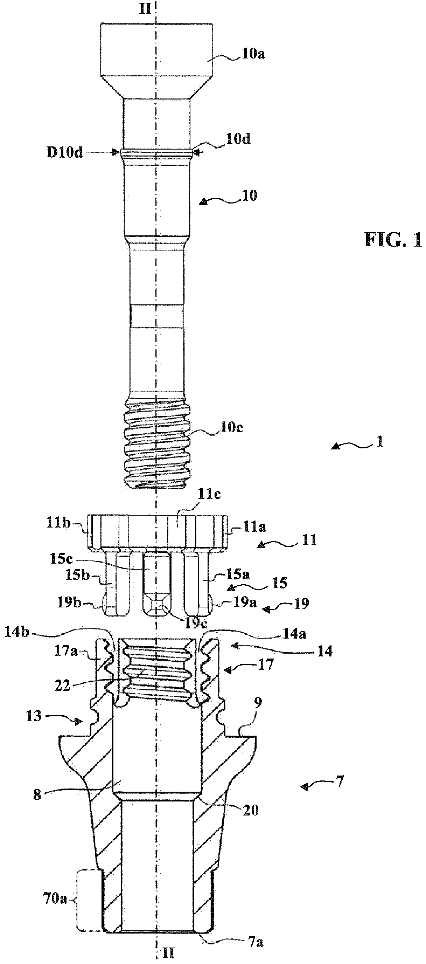

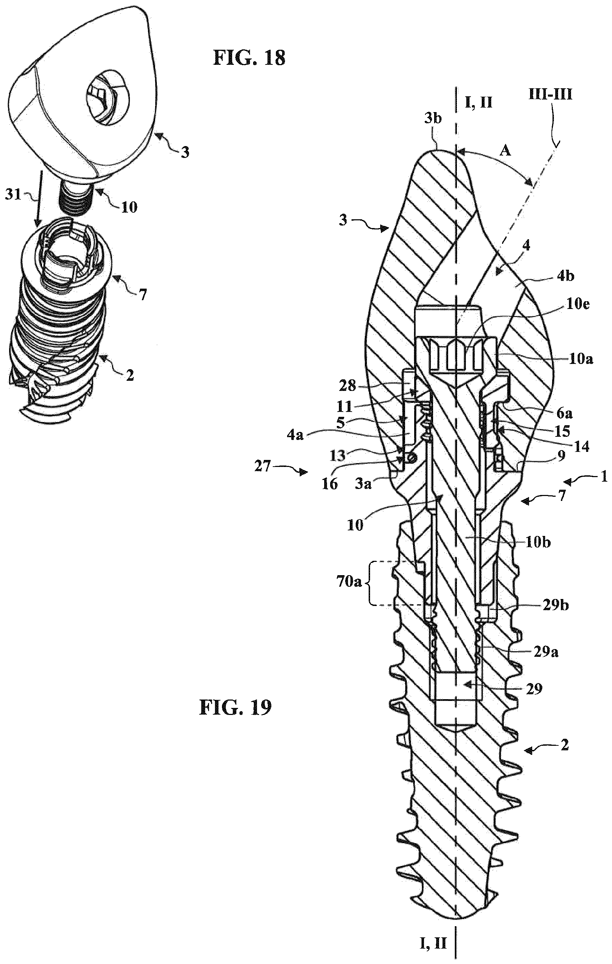

Sur la figure 1 est illustré un exemple de mode de réalisation d'un sous-ensemble dentaire 1 pour la restauration prothétique unitaire d'une dent, conformé pour être reçu sur un implant dentaire 2 (figure 19).

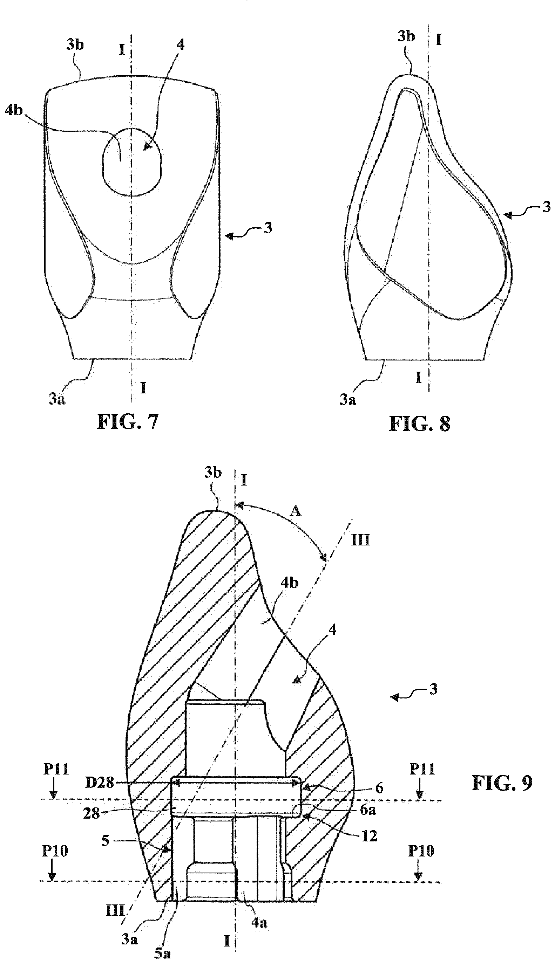

Ledit sous-ensemble dentaire 1 est destiné à être assemblé avec un premier élément 3 (figures 7 à 11), de type âme sur laquelle est opérée une stratification, ou de type âme en céramique, ledit premier élément 3 ayant un premier passage traversant 4 comportant un premier tronçon de passage 4a s'étendant depuis une extrémité proximale 3a dudit premier élément 3 selon un premier axe longitudinal I-I, ledit premier élément 3 comportant au moins un premier organe d'indexation en rotation 5 et un premier organe de retenue axiale 6.

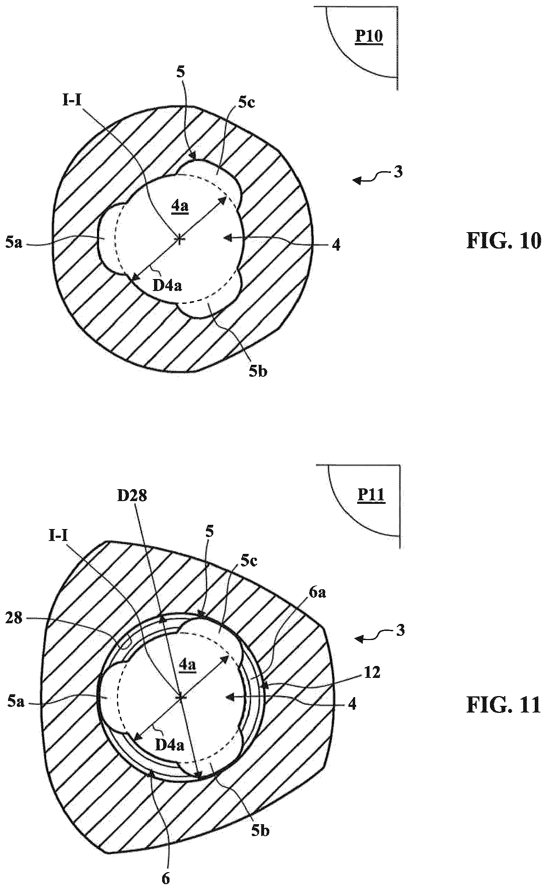

La forme de la section transversale du premier tronçon de passage 4a varie le long du premier axe longitudinal I-I, comme illustré par les figures 10 et 11 prises selon deux plans de coupe transversaux distincts P10 et P11.

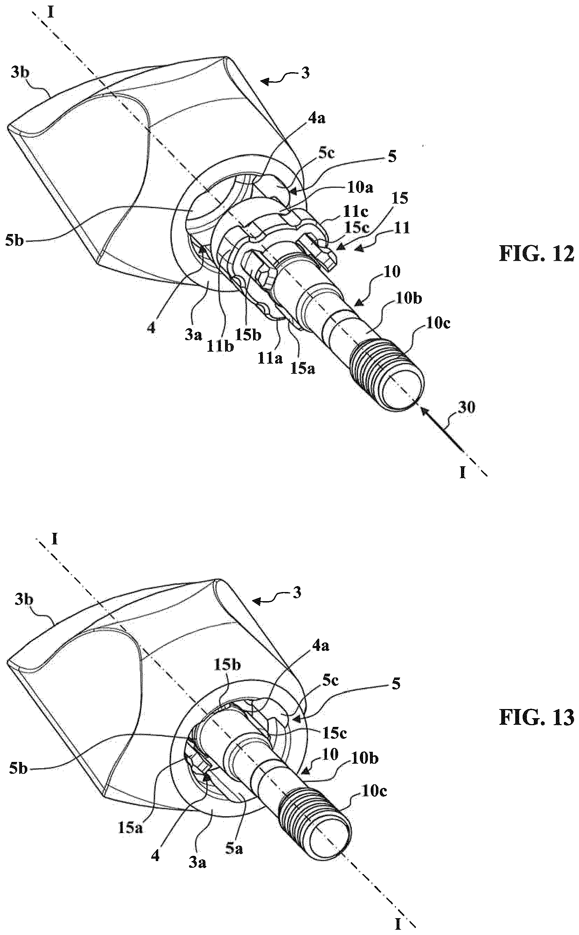

Le sous-ensemble dentaire 1 comporte :
- un deuxième élément 7 (figures 1 à 3) à deuxième passage traversant 8 s'étendant selon un deuxième axe longitudinal II-II, comportant une surface d'appui 9 conformée pour pouvoir recevoir en appui axial l'extrémité proximale 3a dudit premier élément 3, et comportant une extrémité proximale 7a conformée pour pouvoir venir porter en appui axial contre ledit implant dentaire 2 ou conformée pour pouvoir venir pénétrer dans ledit implant dentaire 2 (figure 19),
- une première vis de fixation 10, comportant une tête de première vis 10a depuis laquelle s'étend une tige de première vis 10b apte à traverser le deuxième élément 7 en étant reçue dans le deuxième passage traversant 8 et munie d'un tronçon fileté 10c conformé pour être reçu par vissage dans ledit implant dentaire 2 (figure 19), le premier tronçon de passage 4a du premier élément 3 étant dimensionné de façon à permettre la réception de la tête de première vis 10a par pénétration axiale selon le premier axe longitudinal I-I depuis l'extrémité proximale 3a du premier élément 3 (figures 12 et 13),
- une bague 11 conformée pour former un siège 20 pour la tête de première vis 10a et pour être rapportée dans ledit premier élément 3 par pénétration axiale selon le premier axe longitudinal I-I dans le premier tronçon de passage 4a depuis l'extrémité proximale 3a dudit premier élément 3 (figures 12 et 13) jusque dans une position axiale prédéterminée (figures 13 et 19) dans laquelle des moyens de verrouillage 12 peuvent s'opposer à la translation de la bague 11 en direction de l'extrémité proximale 3a dudit premier élément 3.

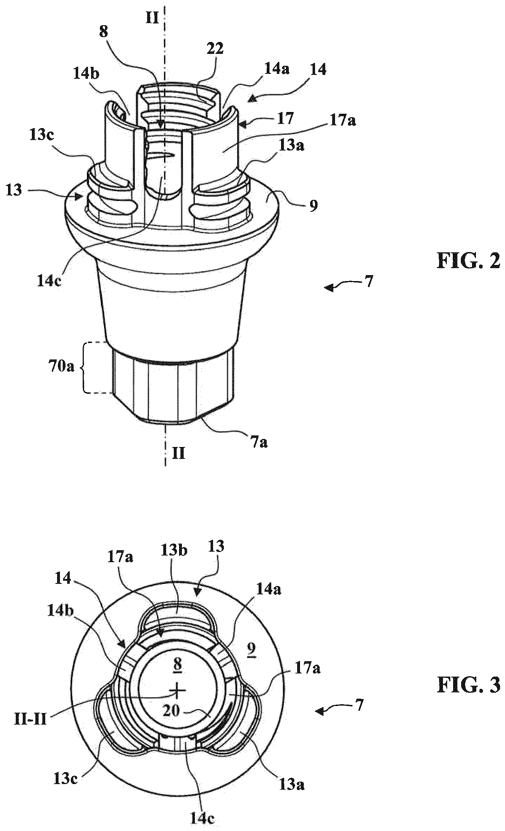

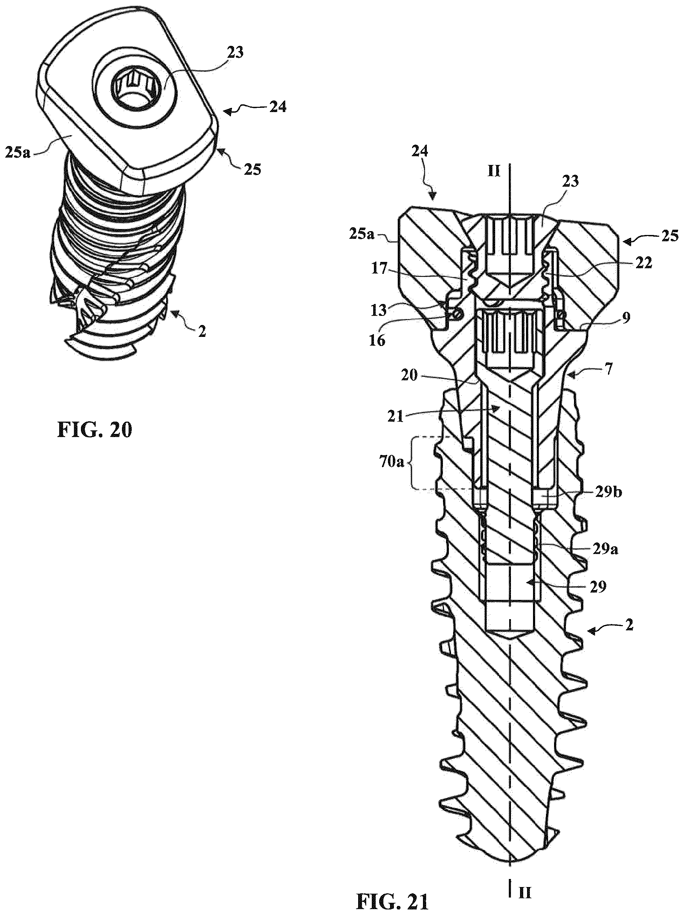

On observe sur les figures 1 et 2 que le deuxième élément 7 comporte un tronçon proximal 70a à section transversale non circulaire (triangulaire à sommets arrondis en l'occurrence). Le tronçon proximal 70a est destiné à être reçu dans un tronçon distal 29b du logement intérieur 29 de l'implant dentaire 2 (figure 21), lequel tronçon distal 29b a également une section transversale non circulaire complémentaire de façon à procurer une indexation en rotation du deuxième élément 7 et de l'implant dentaire 2 autour du deuxième axe longitudinal II-II.

Le deuxième élément 7 comporte au moins un deuxième organe d'indexation en rotation 13 et un troisième organe d'indexation en rotation 14.

La bague 11 comporte au moins un quatrième organe d'indexation en rotation 15.

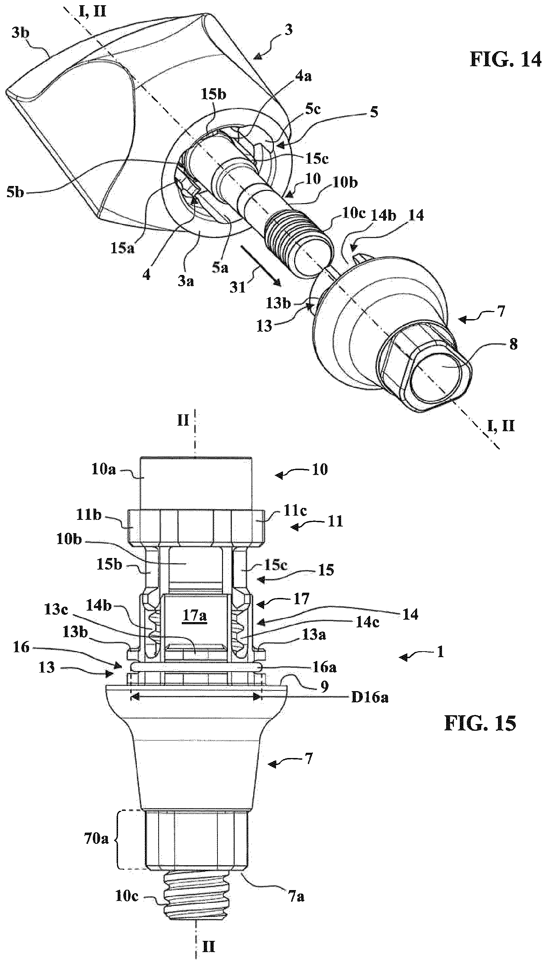

Les troisième 14 et quatrième 15 organes d'indexation en rotation sont conformés pour s'imbriquer mutuellement par interpénétration axiale selon le deuxième axe longitudinal II-II lorsque le deuxième élément 7 et la bague 11 sont dans une orientation relative de pénétration (figure 15) l'un par rapport à l'autre autour du deuxième axe longitudinal II-II, de sorte qu'en une position d'imbrication les troisième 14 et quatrième 15 organes d'indexation en rotation bloquent en rotation relative la bague 11 par rapport au deuxième élément 7 autour du deuxième axe longitudinal II-II.

Les premier 5 et deuxième 13 organes d'indexation en rotation sont conformés pour s'imbriquer mutuellement par interpénétration axiale selon le deuxième axe longitudinal II-II lorsque ledit premier élément 3 et le deuxième élément 7 sont dans une orientation relative de pénétration (figure 14) l'un par rapport à l'autre autour du deuxième axe longitudinal II-II, de sorte qu'en une position d'imbrication (figure 19) les premier 5 et deuxième 13 organes d'indexation en rotation bloquent en rotation relative ledit premier élément 3 par rapport au deuxième élément 7 autour du deuxième axe longitudinal II-II.

Dans sa position axiale prédéterminée, la bague 11 peut être pivotée autour du premier axe longitudinal I-I jusqu'en une orientation de verrouillage (figure 13) dans laquelle le premier organe de retenue axiale 6 s'oppose à la translation de la bague 11 en direction de l'extrémité proximale 3a dudit premier élément 3.

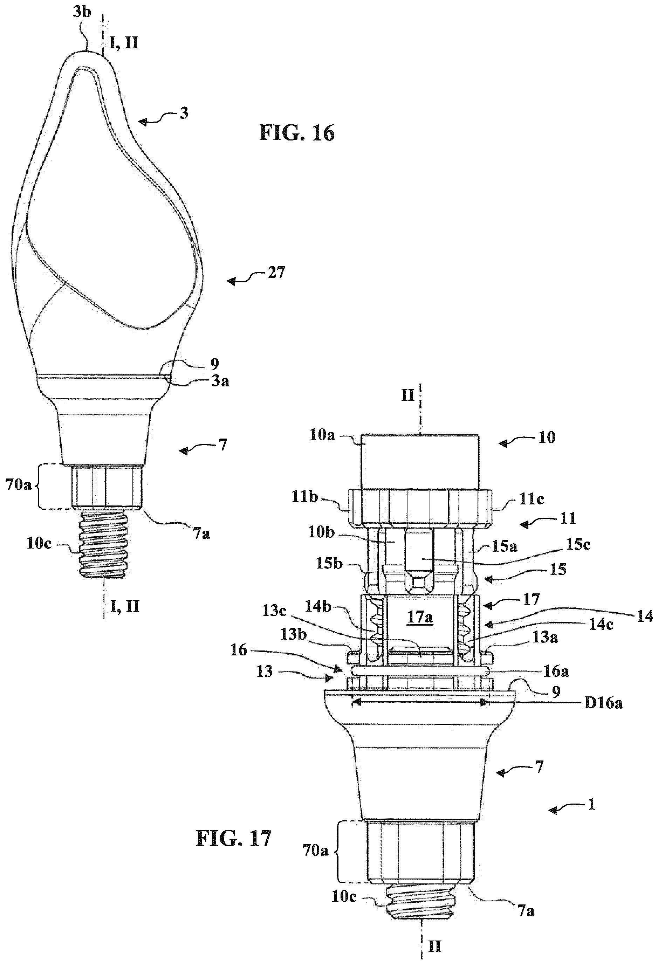

Comme on le constate sur la figure 14, lorsque la bague 11 est dans ladite au moins une orientation angulaire de verrouillage (figure 14 et 15), les premier 5, deuxième 13, troisième 14 et quatrième 15 organes d'indexation s'imbriquent (les premier 5 et deuxième 13 organes d'indexation d'une part, et les troisième 14 et quatrième 15 organes d'indexation d'autre part) pour autoriser la surface d'appui 9 du deuxième élément 7 à venir en appui axial contre l'extrémité proximale 3a dudit premier élément 3 (figure 16).

A l'inverse, lorsque la bague 11 n'est pas dans ladite au moins une orientation angulaire de verrouillage, les premier 5, deuxième 13, troisième 14 et quatrième 15 organes d'indexation forment des butées axiales empêchant que la surface d'appui 9 du deuxième élément 7 vienne en appui axial contre l'extrémité proximale 3a dudit premier élément 3. Deux cas peuvent alors se produire :
- si le deuxième élément 7 et la bague 11 sont dans leur orientation relative de pénétration (figure 15) l'un par rapport à l'autre autour du deuxième axe longitudinal II-II, les premier 5 et deuxième 13 organes d'indexation forment des butées axiales empêchant que la surface d'appui 9 du deuxième élément 7 vienne en appui axial contre l'extrémité proximale 3a dudit premier élément 3 ;
- si le premier élément 3 et le deuxième élément 7 sont dans une orientation relative de pénétration (figure 14) l'un par rapport à l'autre autour du deuxième axe longitudinal II-II, les troisième 14 et quatrième 15 organes d'indexation forment des butées axiales (figure 17) empêchant que la surface d'appui 9 du deuxième élément 7 vienne en appui axial contre l'extrémité proximale 3a dudit premier élément 3.

Des premiers moyens de frottement 16 permettent d'emmancher le deuxième élément 7 dans ledit premier élément 3 selon un emmanchement à friction freinant une translation du deuxième élément 7 à l'écart dudit premier élément 3 selon le premier axe longitudinal I-I. En l'espèce, les premiers moyens de frottement 16 comprennent un anneau élastique 16a à fente radiale dont le diamètre extérieur D16a (figure 15) est plus grand qu'un diamètre intérieur D4a du premier tronçon de passage 4a (figure 10). Lorsque le deuxième élément 7 est engagé dans ledit premier élément 3, l'anneau élastique 16a est comprimé radialement (grâce à sa fente radiale) pour pénétrer dans le premier tronçon de passage 4a.

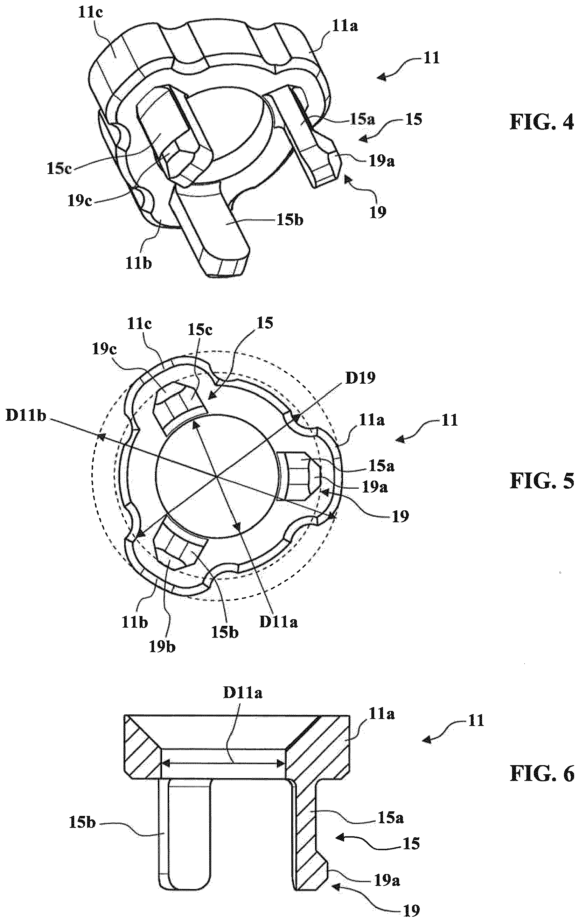

On observe sur la figure 1 que la première vis de fixation 10 comporte une nervure annulaire 10d de diamètre extérieur D10d qui est légèrement plus grand que le diamètre intérieur D11a de la bague 11 (figure 5). La bague 11 peut ainsi être montée captive sur la tige 10b de première vis 10, entre la tête de première vis 10a et la nervure annulaire 10d.

On voit plus particulièrement sur les figures 1 à 6 que les troisième 14 et quatrième 15 organes d'indexation en rotation comprennent :
- sur la bague 11, trois ailettes longitudinales 15a à 15c,
- sur le deuxième élément 7, un tronçon cylindrique 17 à paroi latérale tubulaire 17a dans laquelle sont ménagées trois fentes longitudinales 14a à 14c aptes à recevoir lesdites ailettes longitudinales 15a à 15c.

On observe aussi sur les figures 2 et 3 que ledit au moins un deuxième organe d'indexation en rotation 13 comprend trois saillies radiales 13a à 13c en périphérie du tronçon cylindrique 17 du deuxième élément 7, lesdites saillies radiales 13a à 13c pouvant s'engager dans le premier organe d'indexation en rotation 5, qui est lui-même sous forme de trois rainures longitudinales 5a à 5c ménagées dans la paroi latérale du premier tronçon de passage 4a dudit premier élément 3, lorsque la surface d'appui 9 du deuxième élément 7 reçoit en appui axial l'extrémité proximale 3a dudit premier élément 3.

Sur le deuxième élément 7, les saillies radiales 13 a à 13c et les fentes longitudinales 14a à 14c sont décalées angulairement l'une par rapport à l'autre autour du deuxième axe longitudinal II-II.

II est plus particulièrement visible sur les figures 4 et 5 que :
- la bague 11 comprend trois excroissances radiales 11a à 11c sur sa périphérie, lesdites excroissances radiales 11a à 11c pouvant porter contre le premier organe de retenue axiale 6, qui est lui-même en forme d'épaulement 6a dans le premier tronçon de passage 4a dudit premier élément 3, lorsque la bague 11 est en orientation de verrouillage (figure 19),
- lesdites excroissances radiales 11a à 11c sont conformées pour pouvoir coulisser axialement dans lesdites rainures longitudinales 5a à 5c lors de la pénétration axiale de la bague 11 dans le premier tronçon de passage 4a dudit premier élément 3.

Les excroissances radiales 11a à 11c confèrent à la bague 11 un diamètre extérieur D11b.

La bague 11 comporte des deuxièmes moyens de frottement 19 qui, lorsque la bague 11 est en orientation de verrouillage, sont aptes à freiner une rotation de la bague 11 par rapport au premier élément 3 autour du premier axe longitudinal I-I. En l'espèce, les extrémités libres des ailettes longitudinales 15a à 15c sont pourvues de bossages radiaux 19a à 19c définissant un diamètre extérieur D19 supérieur au diamètre intérieur D4a du premier tronçon de passage 4a. Ainsi, lorsque la bague 11 est pivotée vers une orientation de verrouillage, les ailettes longitudinales 15a à 15c sont légèrement fléchies radialement vers le centre de la bague 11, et les bossages radiaux 19a à 19c appuient contre la paroi latérale du premier tronçon de passage 4a.

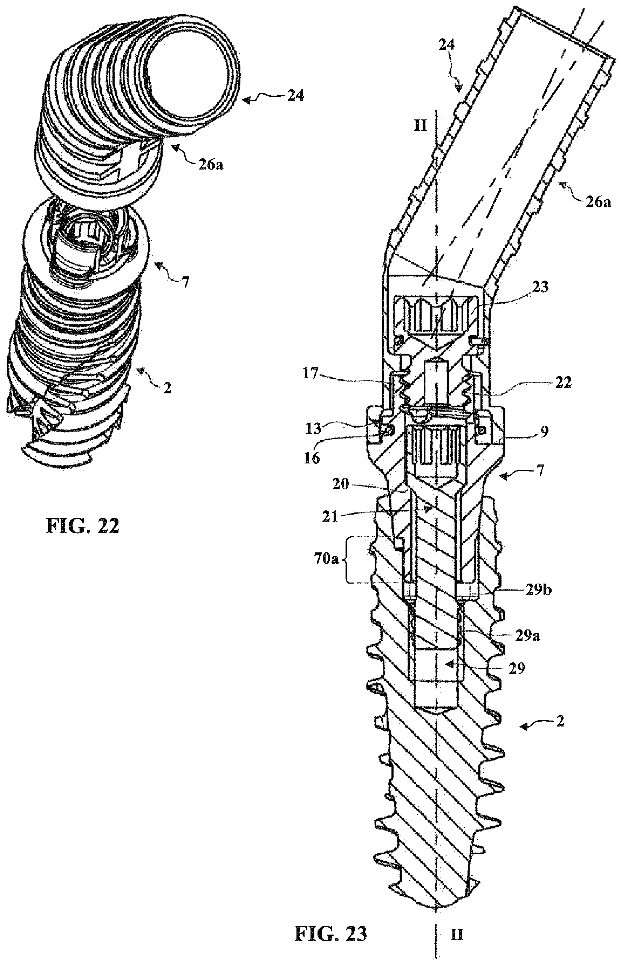

On voit plus particulièrement sur la figure 1 que le deuxième passage traversant 8 du deuxième élément 7 comporte :
- un siège 20 pour la tête d'une deuxième vis 21 (figures 21 et 23) apte à traverser le deuxième élément 7 en étant reçue dans le deuxième passage traversant 8 pour se visser dans l'implant dentaire 2,
- un filetage intérieur distal 22 apte à recevoir une troisième vis 23 permettant la fixation sur le deuxième élément 7 d'un élément transfixé provisoire 24 (figures 20 à 23).

L'élément transfixé provisoire 24 des figures 20 et 21 est une pièce de cicatrisation 25 dont la paroi latérale 25a est conformée pour venir au moins en partie au contact de la gencive.

L'élément transfixé provisoire 24 des figures 22 et 23 est un tube intérieur 26a sur lequel est destinée à être rapportée une dent prothétique standard du commerce pour former une prothèse dentaire provisoire.

On peut aussi prévoir un élément transfixé provisoire 24 du type pièce de prise d'empreinte conformée pour être scannée intra oralement et/ou surmoulée dans une pâte de prise d'empreinte.

Les éléments transfixés provisoires 24 sont indexés en rotation sur le deuxième élément 7 au moyen de rainures longitudinales qui sont semblables aux rainures longitudinales 5a à 5c, et qui coopèrent de façon similaire avec les saillies radiales 13a à 13c du deuxième élément 7.

Le premier élément 3 destiné à coopérer avec le sous-ensemble dentaire 1 est plus particulièrement détaillé sur les figures 7 à 11.

Le premier élément 3 est un élément dentaire pour la restauration prothétique unitaire d'une dent, de type âme sur laquelle est opérée une stratification, ou de type âme en céramique. L'assemblage du premier élément 3 avec le sous-ensemble dentaire 1 permet de rapporter et fixer le premier élément 3 sur l'implant dentaire 2.

Comme déjà indiqué, le premier élément 3 a un premier passage traversant 4 comportant un premier tronçon de passage 4a s'étendant depuis l'extrémité proximale 3a dudit premier élément 3 selon un premier axe longitudinal I-I. Le premier élément 3 comporte également un premier organe de retenue axiale 6.

Le premier élément 3 comporte au moins un premier organe d'indexation en rotation 5 comprenant les trois rainures longitudinales 5a à 5c.

Les premier 5 et deuxième 13 organes d'indexation en rotation sont conformés pour s'imbriquer mutuellement par interpénétration axiale selon le deuxième axe longitudinal II-II lorsque ledit premier élément 3 et le deuxième élément 7 sont dans une orientation relative de pénétration l'un par rapport à l'autre autour du deuxième axe longitudinal II-II (figure 14). En position d'imbrication les premier 5 et deuxième 13 organes d'indexation en rotation bloquent en rotation relative ledit premier élément 3 par rapport au deuxième élément 7 autour du deuxième axe longitudinal II-II.

Le premier tronçon de passage 4a dudit premier élément 3 est conformé pour que la bague 11, dans sa position axiale prédéterminée, puisse être pivotée autour du premier axe longitudinal I-I jusqu'en une orientation de verrouillage (figure 13) dans laquelle le premier organe de retenue axiale 6 s'oppose à la translation de la bague 11 en direction de l'extrémité proximale 3a dudit premier élément 3.

En l'espèce, le premier tronçon de passage 4a comporte un logement annulaire 28 de diamètre intérieur D28 légèrement supérieur au diamètre extérieur D11b de la bague 11.

Le premier organe de retenue axiale 6 est en forme d'épaulement 6a dans le premier tronçon de passage 4a dudit premier élément 3 (figure 11). La bague 11 comprend des excroissances radiales 11a à 11c sur sa périphérie, lesdites excroissances radiales 11a à 11c pouvant porter contre l'épaulement 6a lorsque la bague 11 est en orientation de verrouillage.

On voit plus particulièrement sur la figure 9 que le premier passage traversant 4 comporte en outre un deuxième tronçon de passage 4b s'étendant sensiblement selon un troisième axe longitudinal III-III. Ledit deuxième tronçon de passage 4b prolongeant en oblique le premier tronçon de passage 4a de telle sorte que les premier 4a et deuxième 4b tronçons de passage forment sensiblement entre eux un angle A non nul. L'angle A permet de faire déboucher le deuxième tronçon de passage 4b à l'écart des parties actives (cuspides ou bord libre 3b) du premier élément 3.

Lorsqu'ils sont assemblés, le sous-ensemble dentaire 1 et le premier élément 3 forment un composant dentaire 27 tel qu'illustré sur la figure 16.

L'utilisation du sous-ensemble dentaire 1 pour la fixation du premier élément 3 sur l'implant dentaire 2 va désormais être explicitée à l'aide des figures 12 à 19.

Lors d'un premier temps chirurgical, le praticien installe en bouche du patient l'implant dentaire 2 dans l'os maxillaire ou mandibulaire du patient. Le praticien installe également le deuxième élément 7 sur l'implant dentaire 2, en faisant pénétrer son extrémité proximale 7a dans le logement intérieur 29 (figure 21). Le tronçon proximal 70a du deuxième élément 7 et le tronçon distal 29b du logement intérieur 29 coopèrent pour indexer en rotation l'un par rapport à l'autre le deuxième élément 7 et l'implant dentaire 2 autour du deuxième axe longitudinal II-II. Le premier élément 3 est retenu sur l'implant dentaire 2 par la deuxième vis 21 qui vient en prise dans un tronçon fileté intérieurement 29a et en appui contre le siège 20.

Selon une première possibilité, le praticien peut ensuite rapporter et fixer sur le deuxième élément 7 une pièce de cicatrisation 25 au moyen d'une troisième vis 23 qui est reçue par vissage dans le filetage intérieur distal 22 qui est ménagé dans le tronçon cylindrique 17. La pièce de cicatrisation 25 est également indexée en rotation sur le deuxième élément 7 (grâce aux saillies radiales 13a à 13c de ce dernier) et est destinée à rester en place lors d'un temps d'ostéo-intégration de l'implant dentaire 2 dans l'os maxillaire ou mandibulaire et de cicatrisation de la gencive autour du premier élément 3. Il se créé alors une attache de la gencive en périphérie du deuxième élément 7, laquelle attache est importante pour la préservation sur le long terme de l'os en périphérie de l'implant dentaire 2.

Après cicatrisation, une empreinte peut être réalisée avec un scanner intra-oral pour ensuite permettre la réalisation sur mesure du premier élément 3, par exemple par conception et fabrication assistées par ordinateur. Lors de cette conception et fabrication, le deuxième tronçon de passage traversant 4b est disposé de façon oblique par rapport au premier tronçon de passage traversant 4a (sensiblement selon l'angle A) pour faire déboucher le deuxième tronçon de passage 4b à l'écart des parties actives (cuspides ou bord libre 3b) du premier élément 3.

En alternative à un scanner intra-oral, on peut recourir à une pièce de prise d'empreinte destinée à être surmoulée dans une pâte de prise d'empreinte, laquelle est rapportée et fixée temporairement sur le premier élément 3 au lieu et à la place de la pièce de cicatrisation 25.

Selon une autre possibilité, si les conditions de stabilité de l'implant dentaire 2 sont suffisantes dès sa pose, on peut réaliser et fixer immédiatement une prothèse dentaire provisoire comportant un tube intérieur 26a sur lequel est rapportée et fixée une prothèse de dent standard du commerce (en matière plastique par exemple).

La prothèse dentaire provisoire (par l'intermédiaire du tube intérieur 26a) est également indexée en rotation sur le deuxième élément 7 (grâce aux saillies radiales 13a à 13c de ce dernier) et est destinée à rester en place lors d'un temps d'ostéo-intégration de l'implant dentaire 2 dans l'os maxillaire ou mandibulaire et de cicatrisation de la gencive autour du premier élément 3. Il se créé alors une attache de la gencive en périphérie du deuxième élément 7, laquelle attache est importante pour la préservation sur le long terme de l'os en périphérie de l'implant dentaire 2.

Une fois le premier élément 3 (illustré sur les figures 7 à 11) fabriqué se déroule un deuxième temps chirurgical lors duquel le praticien rapporte et fixe le premier élément 3 sur l'implant dentaire 2 par l'intermédiaire du sous-ensemble 1 selon la présente invention.

Le praticien commence déjà par retirer la troisième vis 23, la deuxième vis 21 et l'élément de cicatrisation 25.

Le praticien saisit ensuite la première vis de fixation 10 et l'insère dans la bague 11 jusqu'à la disposer entre la tête de première vis 10a et la nervure annulaire 10d. La bague 11 est alors captive sur la première vis de fixation 10.

Les excroissances radiales 11a à 11c de la bague 11 sont disposées en correspondance des rainures longitudinales 5a à 5c du premier organe d'indexation en rotation 5 (figure 12), puis le praticien insère ensuite dans le premier tronçon de passage 4a la bague 11 et la tête de première vis 10a par un mouvement de translation axiale selon le premier axe longitudinal I-I depuis l'extrémité proximale 3a du premier élément 3, jusqu'à faire parvenir la bague 11 dans la position axiale prédéterminée (mouvement schématisé par la flèche 30 sur la figure 12).

Lors de ce mouvement, les excroissances radiales 11a à 11c coulissent dans les rainures longitudinales 5a à 5c. En fin de pénétration, la bague 11 se trouve engagée dans le logement annulaire 28 en position axiale prédéterminée, en étant disposée axialement au-delà de l'épaulement 6a selon le premier axe longitudinal I-I.

Le praticien fait alors tourner la bague 11 autour du premier axe longitudinal I-I (d'un sixième de tour par exemple) pour aboutir à la configuration illustrée sur la figure 13, dans laquelle les excroissances radiales 11a à 11c ne se trouvent plus en correspondance des rainures longitudinales 5a à 5c mais se trouvent en correspondance de l'épaulement 6a du premier organe de retenue axiale 6. La bague 11 se trouve alors dans une orientation (angulaire) de verrouillage dans laquelle les moyens de verrouillage 12 (comprenant les excroissances radiales 11a à 11c et l'épaulement 6a) s'opposent à la translation de la bague 11 en direction de l'extrémité proximale 3a du premier élément 3. En d'autres termes, la bague 11 est rapportée et fixée axialement dans le premier tronçon de passage 4a pour constituer un siège de vis pour la première vis de fixation 10, laquelle est ainsi retenue captive dans le premier élément 3. On aboutit alors à un assemblage préliminaire constitué du premier élément 3, de la bague 11 et de la première vis de fixation 10.

Lorsque la bague 11 est pivotée en orientation de verrouillage, les bossages radiaux 19a à 19c des deuxièmes moyens de frottement 19 viennent en appui frottant contre la partie de paroi latérale du premier tronçon de passage 4a présentant un diamètre intérieur D4a légèrement inférieur au diamètre extérieur D19. Les deuxièmes moyens de frottement 19 limitent les risques que la bague 11 pivote accidentellement de façon que les excroissances radiales 11a à 11c reviennent en correspondance des rainures longitudinales 5a à 5c.

Lors d'une étape ultérieure, le praticien rapporte l'assemblage préliminaire de la figure 13 (premier élément 3, première vis de fixation 10 et bague 11) sur le deuxième élément 7 (qui est en bouche du patient, engagé sur l'implant dentaire 2) comme illustré sur les figures 14 et 18, pour former un composant dentaire 27 comprenant le premier élément 3, la première vis de fixation 10, la bague 11 et le deuxième élément 7 (figure 16).

Pour ce faire, les rainures longitudinales 5a à 5c du premier organe d'indexation en rotation 5 sont placées en correspondances des saillies radiales 13a à 13c du deuxième organe d'indexation en rotation 13 selon le premier axe longitudinal I-I (qui coïncide alors avec le deuxième axe longitudinal II-II). Simultanément, les fentes longitudinales 14a à 14c du troisième organe d'indexation en rotation 14 se trouvent automatiquement en correspondance des ailettes longitudinales 15a à 15c du quatrième organe d'indexation en rotation 15. Le praticien emmanche alors le premier élément 3 sur le deuxième élément 7 (mouvement illustré par la flèche 31) jusqu'à amener l'extrémité proximale 3a du premier élément 3 en appui contre la surface d'appui 9 du deuxième élément 7. Lors de ce mouvement :
- les fentes longitudinales 14a à 14c et les ailettes longitudinales 15a à 15c s'imbriquent mutuellement par interpénétration axiale (figure 15),
- les rainures longitudinales 5a à 5c et les saillies radiales 13a à 13c s'imbriquent mutuellement par interpénétration axiale,
- les premiers moyens de frottement 16 (anneau élastique 16a) viennent frotter contre la partie de paroi latérale du premier tronçon de passage 4a présentant un diamètre intérieur D4a légèrement inférieur au diamètre extérieur D16a.

Si la bague 11 n'était pas en orientation angulaire de verrouillage, les premier 5, deuxième 13, troisième 14 et quatrième 15 organes d'indexation en rotation formeraient des butées axiales empêchant que la surface d'appui 9 du deuxième élément 7 vienne en appui axial contre l'extrémité proximale 3a dudit premier élément 3. De façon plus précise, deux cas peuvent se produire :
- soit le deuxième élément 7 et la bague 11 sont dans leur orientation relative de pénétration (figure 15) l'un par rapport à l'autre autour du deuxième axe longitudinal II-II, et alors les premier 5 et deuxième 13 organes d'indexation en rotation forment des butées axiales empêchant que la surface d'appui 9 du deuxième élément 7 vienne en appui axial contre l'extrémité proximale 3a dudit premier élément 3 ;
- soit le premier élément 3 et le deuxième élément 7 sont dans une orientation relative de pénétration (figure 14) l'un par rapport à l'autre autour du deuxième axe longitudinal II-II, et alors les troisième 14 et quatrième 15 organes d'indexation en rotation forment des butées axiales (figure 17) empêchant que la surface d'appui 9 du deuxième élément 7 vienne en appui axial contre l'extrémité proximale 3a dudit premier élément 3.

On constate ainsi que, s'il est possible d'amener la surface d'appui 9 du deuxième élément 7 en appui contre l'extrémité proximale 3a du premier élément 3, c'est que la bague 11 se trouve nécessairement en orientation de verrouillage et peut donc remplir de façon fiable le rôle de siège 20 pour la première vis de fixation 10.

Par ailleurs, après amenée de la surface d'appui 9 du deuxième élément 7 en appui contre l'extrémité proximale 3a du premier élément 3 :
- les premier 5 et deuxième 13 organes d'indexation en rotation sont dans une position d'imbrication dans laquelle ils bloquent en rotation ledit premier élément 3 par rapport au deuxième élément 7 autour du deuxième axe longitudinal II-II ;
- les troisième 14 et quatrième 15 organes d'indexation en rotation sont dans une position d'imbrication dans laquelle ils bloquent en rotation la bague 11 par rapport au deuxième élément 7 autour du deuxième axe longitudinal II-II.

Par ailleurs, les premiers moyens de frottement 16 (anneau élastique 16a) s'opposent à un déplacement du deuxième élément 7 à l'écart dudit premier élément 3 selon le premier axe longitudinal I-I.

Il en résulte de façon globale que la bague 11 est bloquée en orientation de verrouillage par rapport au premier élément 3 après assemblage du composant dentaire 27.

Une fois le composant dentaire 27 assemblé, le praticien procède alors au vissage de la première vis de fixation 10 dans le tronçon fileté intérieurement 29a au moyen d'un outil de vissage (tel que décrit par exemple dans le document EP 2 607 722 A1) engagé à travers le deuxième tronçon de passage 4b : la tête de vissage de l'outil de vissage vient s'engager dans l'empreinte femelle 10e à six pans de la tête de première vis 10a. La tête de première vis 10a, en appui sur la bague 11 formant siège, maintient les premier 3 et deuxième 7 éléments sur l'implant dentaire 2. On se trouve alors dans la configuration illustrée sur la figure 19.

L'angle A non nul permet de faire déboucher le deuxième tronçon de passage 4b à l'écart des parties actives (cuspides ou bord libre 3b) du premier élément 3. Il est toutefois possible de recourir à des premier 4a et deuxième 4b tronçons de passage alignés (angle A nul) en l'absence de conflit avec des parties actives (cuspides ou bord libre 3b) du premier élément 3.

Que l'angle A soit nul ou pas, l'engagement de la tête de première vis 10a et de la bague 11 par l'extrémité proximale du premier élément permet de conférer au deuxième tronçon de passage 4b une section transversale seulement suffisante pour assurer l'accès de l'outil de vissage à la tête de première vis 10a (et donc une section transversale plus réduite que s'il fallait faire passer la vis selon un trajet, éventuellement curviligne si l'angle A est non nul, à travers le premier élément 3 depuis le deuxième tronçon de passage 4b vers le premier tronçon de passage 4a). Le premier élément 3 est ainsi plus solide et risque moins d'être affecté dans sa teinte par des parties rendues translucides par de faibles épaisseurs de matière.

Si une maintenance du premier élément 3 doit être effectuée à un moment ultérieur, le praticien procède au dévissage de la première vis de fixation 10 et retire le premier élément 3, la bague 11 et la première vis de fixation 10. Le deuxième élément 7 peut rester en bouche du patient (pour ne pas rompre inutilement l'attache des gencives tout autour de celui-ci) en le recouvrant d'une pièce de cicatrisation 25 comme sur la figure 21.

II a été décrit précédemment le fait de rapporter et fixer le premier élément 3 sur un deuxième élément 7 déjà en bouche d'un patient afin de favoriser la cicatrisation de la gencive autour dudit deuxième élément 7. Le composant dentaire 27 est alors assemblé in-vivo.

II est toutefois envisageable d'assurer la phase de cicatrisation au moyen d'une pièce distincte du deuxième élément 7. En ce cas, on peut livrer au praticien dentaire un composant dentaire 27 tel qu'illustré sur la figure 16, qui aura été préalablement assemblé ex-vivo par un procédé d'assemblage comprenant les étapes suivantes :
a) insérer la tige 10b de la première vis 10 dans la bague 11,
b) insérer dans le premier tronçon de passage 4a la bague 11 et la tête de première vis 10a par un mouvement de translation axiale selon le premier axe longitudinal I-I depuis l'extrémité proximale 3a du premier élément 3, jusqu'à faire parvenir la bague 11 dans la position axiale prédéterminée,
c) faire pivoter la bague 11 autour du premier axe longitudinal I-I pour l'amener en orientation de verrouillage,
d) rapporter le deuxième élément 7 sur l'extrémité proximale 3a du premier élément 3 en engageant la tige de première vis 10b dans le deuxième passage traversant 8 jusqu'à amener la surface d'appui 9 du deuxième élément 7 en appui contre l'extrémité proximale 3a du premier élément 3.

Lorsqu'il reçoit le composant dentaire 27, le praticien n'a plus qu'à l'installer sur l'implant dentaire 2 et à le visser pour l'y maintenir fixé.

La présente invention n'est pas limitée aux modes de réalisation qui ont été explicitement décrits, mais elle est définie par les revendications ci-après.

## Revendications

1. - Sous-ensemble dentaire (1) pour la restauration prothétique unitaire d'une dent, conformé pour être reçu sur un implant dentaire (2), ledit sous-ensemble dentaire (1) pouvant être assemblé avec un premier élément (3), de type âme sur laquelle est opérée une stratification, ou de type âme en céramique, ledit sous-ensemble dentaire (1) comportant :
- un deuxième élément (7) à deuxième passage traversant (8) s'étendant selon un deuxième axe longitudinal (II-II), comportant une surface d'appui (9) conformée pour pouvoir recevoir en appui axial ledit premier élément (3), et comportant une extrémité proximale (7a) conformée pour pouvoir venir porter en appui axial contre ou conformée pour pouvoir venir pénétrer dans ledit implant dentaire (2),
- une première vis de fixation (10), comportant une tête de première vis (10a) depuis laquelle s'étend une tige de première vis (10b) apte à traverser le deuxième élément (7) en étant reçue dans le deuxième passage traversant (8) et munie d'un tronçon fileté (10c) conformé pour être reçu par vissage dans ledit implant dentaire (2), la tête de première vis (10a) étant dimensionnée de façon à permettre sa réception dans ledit premier élément (3),
- une bague (11) conformée pour former un siège pour la tête de première vis (10a), et conformée pour être rapportée et retenue dans ledit premier élément (3),
**caractérisé en ce que** :
- ledit deuxième élément (7) comporte au moins un deuxième organe d'indexation en rotation (13) conformé pour bloquer en rotation ledit premier élément (3) par rapport au deuxième élément (7) autour du deuxième axe longitudinal (II-II), et comporte un troisième organe d'indexation en rotation (14),
- la bague (11) comporte au moins un quatrième organe d'indexation en rotation (15),
- les troisième (14) et quatrième (15) organes d'indexation en rotation sont conformés pour s'imbriquer mutuellement par interpénétration axiale selon le deuxième axe longitudinal (II-II) lorsque le deuxième élément (7) et la bague (11) sont dans une orientation relative de pénétration l'un par rapport à l'autre autour du deuxième axe longitudinal (II-II), de sorte qu'en une position d'imbrication les troisième (14) et quatrième (15) organes d'indexation en rotation bloquent en rotation la bague (11) par rapport au deuxième élément (7) autour du deuxième axe longitudinal (II-II).

2. - Sous-ensemble dentaire (1) selon la revendication 1, **caractérisé en ce que** la bague (11) est montée captive sur la tige de première vis (10b).

3. - Sous-ensemble dentaire (1) selon l'une des revendications 1 ou 2, **caractérisé en ce que** les troisième (14) et quatrième (15) organes d'indexation en rotation comprennent :
- sur l'un de la bague (11) ou du deuxième élément (7), au moins une ailette longitudinale (15a-15c),
- sur l'autre de la bague (11) ou du deuxième élément (7), un tronçon cylindrique (17) à paroi latérale tubulaire (17a) dans laquelle est ménagée au moins une fente longitudinale (14a-14c) apte à recevoir ladite au moins une ailette longitudinale (15a-15c).

4. - Sous-ensemble dentaire (1) selon la revendication 3, **caractérisé en ce que** ledit au moins un deuxième organe d'indexation en rotation (13) comprend une saillie radiale (13a-13c) en périphérie d'un tronçon cylindrique (17) du deuxième élément (7).

5. - Sous-ensemble dentaire (1) selon la revendication 4, **caractérisé en ce que** la bague (11) comprend une excroissance radiale (11a-11c) en périphérie de la bague (11).

6. - Sous-ensemble dentaire (1) selon l'une quelconque des revendications 3 à 5, **caractérisé en ce que**, sur ledit deuxième élément (7), ladite saillie radiale (13a-13c) et ladite fente (14a-14c) ou ailette (15a-15c) longitudinale sont décalées angulairement l'une par rapport à l'autre autour du deuxième axe longitudinal (II-II).

7. - Sous-ensemble dentaire (1) selon l'une quelconque des revendications 1 à 6, **caractérisé en ce que** le deuxième passage traversant (8) du deuxième élément (7) comporte :
- un siège (20) pour la tête d'une deuxième vis (21) apte à traverser le deuxième élément (7) en étant reçue dans le deuxième passage traversant (8) pour se visser dans l'implant dentaire (2),
- un filetage intérieur distal (22) apte à recevoir une troisième vis (23) permettant la fixation sur le deuxième élément (7) d'un élément transfixé provisoire (24).

8. - Sous-ensemble dentaire (1) selon la revendication 7, **caractérisé en ce qu'**il comprend au moins un élément transfixé provisoire (24), à savoir :
- une pièce de cicatrisation (25) dont la paroi latérale (25a) est conformée pour venir au moins en partie au contact de la gencive, et/ou
- une pièce de prise d'empreinte conformée pour être scannée intra oralement et/ou surmoulée dans une pâte de prise d'empreinte, et/ou
- une prothèse dentaire provisoire.

9. - Sous-ensemble dentaire (1) selon l'une des revendications 7 ou 8, **caractérisé en ce que** l'élément transfixé provisoire (24) est indexé en rotation sur le deuxième élément (7).

10. - Composant dentaire (27) comportant :
- un premier élément (3) pour la restauration prothétique unitaire d'une dent, de type âme sur laquelle est opérée une stratification, ou de type âme en céramique, ledit premier élément (3) ayant un premier passage traversant (4) comportant un premier tronçon de passage (4a) s'étendant depuis une extrémité proximale (3a) dudit premier élément (3) selon un premier axe longitudinal (I-I), ledit premier élément (3) comportant un premier organe de retenue axiale (6),
- un sous-ensemble dentaire (1) sur lequel peut être assemblé ledit premier élément (3), ledit sous-ensemble dentaire (1) étant lui-même conformé pour être reçu sur un implant dentaire (2) et comportant :
a. un deuxième élément (7) à deuxième passage traversant (8) s'étendant selon un deuxième axe longitudinal (II-II), comportant une surface d'appui (9) conformée pour pouvoir recevoir en appui axial l'extrémité proximale (3a) dudit premier élément (3), et comportant une extrémité proximale (7a) conformée pour pouvoir venir porter en appui axial contre ou conformée pour pouvoir venir pénétrer dans ledit implant dentaire (2),
b. une première vis de fixation (10), comportant une tête de première vis (10a) depuis laquelle s'étend une tige de première vis (10b) apte à traverser le deuxième élément (7) en étant reçue dans le deuxième passage traversant (8) et munie d'un tronçon fileté (10c) conformé pour être reçu par vissage dans ledit implant dentaire (2), le premier tronçon de passage (4a) du premier élément (3) étant dimensionné de façon à permettre la réception de la tête de première vis (10a) par pénétration axiale selon le premier axe longitudinal (I-I) depuis l'extrémité proximale (3a) du premier élément (3),
c. une bague (11) conformée pour former un siège pour la tête de première vis (10a) et pour être rapportée dans ledit premier élément (3) par pénétration axiale selon le premier axe longitudinal (I-I) dans le premier tronçon de passage (4a) depuis l'extrémité proximale (3a) dudit premier élément (3) jusque dans une position axiale prédéterminée dans laquelle des moyens de verrouillage (12) peuvent s'opposer à la translation de la bague (11) en direction de l'extrémité proximale (3a) dudit premier élément (3),
dans lequel :
- ledit deuxième élément (7) comporte au moins un deuxième organe d'indexation en rotation (13) et un troisième organe d'indexation en rotation (14),
- la bague (11) comporte au moins un quatrième organe d'indexation en rotation (15),
- les troisième (14) et quatrième (15) organes d'indexation en rotation sont conformés pour s'imbriquer mutuellement par interpénétration axiale selon le deuxième axe longitudinal (II-II) lorsque le deuxième élément (7) et la bague (11) sont dans une orientation relative de pénétration l'un par rapport à l'autre autour du deuxième axe longitudinal (II-II), de sorte qu'en une position d'imbrication les troisième (14) et quatrième (15) organes d'indexation en rotation bloquent en rotation relative la bague (11) par rapport au deuxième élément (7) autour du deuxième axe longitudinal (II-II),
- ledit premier élément (3) comporte au moins un premier organe d'indexation en rotation (5),
- les premier (5) et deuxième (13) organes d'indexation en rotation sont conformés pour s'imbriquer mutuellement par interpénétration axiale selon le deuxième axe longitudinal (II-II) lorsque ledit premier élément (3) et le deuxième élément (7) sont dans une orientation relative de pénétration l'un par rapport à l'autre autour du deuxième axe longitudinal (II-II), de sorte qu'en une position d'imbrication les premier (5) et deuxième (13) organes d'indexation en rotation bloquent en rotation relative ledit premier élément (3) par rapport au deuxième élément (7) autour du deuxième axe longitudinal (II-II),
- le premier tronçon de passage (4a) dudit premier élément (3) est conformé pour que la bague (11), dans sa position axiale prédéterminée, puisse être pivotée autour du premier axe longitudinal (I-I) jusqu'en une orientation de verrouillage dans laquelle le premier organe de retenue axiale (6) s'oppose à la translation de la bague (11) en direction de l'extrémité proximale (3a) dudit premier élément (3).

11. - Composant dentaire (27) selon la revendication 10, **caractérisé en ce que**, lorsque la bague (11) n'est pas dans ladite au moins une orientation angulaire de verrouillage, les premier (5), deuxième (13), troisième (14) et quatrième (15) organes d'indexation forment des butées axiales empêchant que la surface d'appui (9) du deuxième élément (7) vienne en appui axial contre l'extrémité proximale (3a) dudit premier élément (3).

12. - Composant dentaire (27) selon l'une des revendications 10 ou 11, **caractérisé en ce que** des premiers moyens de frottement (16) permettent d'emmancher le deuxième élément (7) dans ledit premier élément (3) selon un emmanchement à friction freinant une translation du deuxième élément (7) à l'écart dudit premier élément (3) selon le premier axe longitudinal (I-I).

13. - Composant dentaire (27) selon l'une quelconque des revendications 10 à 12, **caractérisé en ce que**, ledit premier organe d'indexation en rotation (5) est sous forme d'une rainure longitudinale (5a-5c), ménagée dans la paroi latérale du premier tronçon de passage (4a) dudit premier élément (3), et dans laquelle peut s'engager une saillie radiale (13a-13c) formant le deuxième organe d'indexation en rotation (13) du deuxième élément (7) lorsque la surface d'appui (9) du deuxième élément (7) reçoit en appui axial l'extrémité proximale (3a) dudit premier élément (3).

14. - Composant dentaire (27) selon l'une quelconque des revendications 10 à 13, **caractérisé en ce que** :
- le premier organe de retenue axiale (6) est en forme d'épaulement (6a) dans le premier tronçon de passage (4a) dudit premier élément (3),
- la bague (11) comprend une excroissance radiale (11a-11c) en périphérie de la bague (11), ladite excroissance radiale (11a-11c) pouvant porter contre l'épaulement (6a) lorsque la bague (11) est en orientation de verrouillage.

15. - Composant dentaire (27) selon l'une quelconque des revendications 10 à 14, **caractérisé en ce que** le premier passage traversant (4) comporte en outre un deuxième tronçon de passage (4b), ledit deuxième tronçon de passage (4b) prolongeant en oblique le premier tronçon de passage (4a) de telle sorte que les premier (4a) et deuxième (4b) tronçons de passage forment entre eux un angle (A) non nul.

16. - Procédé d'assemblage ex-vivo d'un composant dentaire (27) selon l'une quelconque des revendications 10 à 15, comprenant les étapes suivantes :
a) insérer la tige (10b) de la première vis (10) dans la bague (11),
b) insérer dans le premier tronçon de passage (4a) la bague (11) et la tête de première vis (10a) par un mouvement de translation axiale selon le premier axe longitudinal (I-I) depuis l'extrémité proximale (3a) du premier élément (3), jusqu'à faire parvenir la bague (11) dans la position axiale prédéterminée,
c) faire pivoter la bague (11) autour du premier axe longitudinal (I-I) pour l'amener en orientation de verrouillage,
d) rapporter le deuxième élément (7) sur l'extrémité proximale (3a) du premier élément (3) en engageant la tige de première vis (10b) dans le deuxième passage traversant (8) jusqu'à amener la surface d'appui (9) du deuxième élément (7) en appui contre l'extrémité proximale (3a) du premier élément (3).

## Patentansprüche

1. Dentale Untergruppe (1) für die einheitliche prothetische Restauration eines Zahns, die zur Aufnahme auf einem Zahnimplantat (2) angepasst ist, wobei besagte dentale Untergruppe (1) mit einem ersten Element (3) zusammengesetzt werden kann, das vom Typ einem Kern, auf dem eine Schichtung ausgeführt ist, oder vom Typ einem Keramikkern entspricht, wobei die besagte dentale Untergruppe (1) aufweist:
- ein zweites Element (7) mit einem zweiten Durchgang (8), der sich entlang einer zweiten Längsachse (II-II) erstreckt, das eine Anlagefläche (9) aufweist, die so angepasst ist, dass sie das besagte erste Element (3) zur axialen Anlage daran aufnehmen kann und ein proximales Ende (7a) aufweist, das so angepasst ist, dass es axial gegen das Zahnimplantat (2) zur Anlage kommen kann oder so angepasst ist, dass es in dieses eindringen kann,
- eine erste Befestigungsschraube (10), die einen ersten Schraubenkopf (10a) aufweist, von dem sich ein erster Schraubenschaft (10b) erstreckt, der in der Lage ist, durch das zweite Element (7) hindurchzugehen, während er im zweiten Durchgang (8) aufgenommen wird und mit einem Gewindeabschnitt (10c) versehen ist, der so angepasst ist, dass er durch Einschrauben in das besagte Zahnimplantat (2) aufgenommen werden kann, wobei der erste Schraubenkopf (10a) dimensioniert ist, um seine Aufnahme in besagtem ersten Element (3) zu erlauben,
- einen Ring (11), der so angepasst ist, dass er einen Sitz für den ersten Schraubenkopf (10a) bildet und angepasst ist, an dem besagten ersten Element (3) befestigt und gehalten zu werden,
**dadurch gekennzeichnet, dass:**
- das besagte zweite Element (7) mindestens ein zweites rotierbares Indexierungsorgan (13) aufweist, das zum Blockieren der Rotation des besagten ersten Elements (3) um die zweite Längsachse (II-II) relativ zu dem zweiten Element (7) angepasst ist, und ein drittes rotierbares Indexierungsorgan (14) aufweist,
- der Ring (11) mindestens ein viertes rotierbares Indexierungsorgan (15) aufweist,
- das dritte (14) und das vierte (15) rotierbare Indexierungsorgan so angepasst sind, dass sie sich mittels axialer Durchdringung entlang der zweiten Längsachse (II-II) gegenseitig ineinander verschränken, wenn das zweite Element (7) und der Ring (11) in einer relativen Eindringungsausrichtung um die zweite Längsachse (II-II) sind, sodass in einer Verschränkungsposition das dritte (14) und das vierte (15) rotierbare Indexierungsorgan den Ring (11) bezüglich einer Rotation relativ zum zweiten Element (7) um die zweite Längsachse (II-II) blockieren.

2. Dentale Untergruppe (1) nach Anspruch 1, **dadurch gekennzeichnet, dass** der Ring (11) unverlierbar auf dem ersten Schraubenschaft (10b) montiert ist.

3. Dentale Untergruppe (1) nach einem der Ansprüche 1 oder 2, **dadurch gekennzeichnet, dass** die dritten (14) und vierten (15) rotierbaren Indexierungsorgane umfassen:
- mindestens eine Längsrippe (15a-15c) an dem Ring (11) oder dem zweiten Element (7),
- einen zylindrischen Abschnitt (17) mit einer rohrförmigen Seitenwand (17a) auf jeweils dem anderen Ring (11) oder dem zweiten Element (7), in der mindestens ein Längsschlitz (14a-14c) vorgesehen ist, der besagte mindestens eine Längsrippe (15a-15c) aufnehmen kann.

4. Dentale Untergruppe (1) nach Anspruch 3, **dadurch gekennzeichnet, dass** das besagte mindestens eine zweite rotierbare Indexierungsorgan (13) einen radialen Überstand (13a-13c) am Umfang eines zylindrischen Abschnitts (17) des zweiten Elements (7) umfasst.

5. Dentale Untergruppe (1) nach Anspruch 4, **dadurch gekennzeichnet, dass** der Ring (11) einen radialen Vorsprung (11a-11c) an dem Umfang des Rings (11) umfasst.

6. Dentale Untergruppe (1) nach einem der Ansprüche 3 bis 5, **dadurch gekennzeichnet, dass** an dem zweiten Element (7) der besagte radiale Überstand (13a-13c) und der besagte Längsschlitz (14a-14c) oder die besagte Längsrippe (15a-15c) bezüglich der zweiten Längsachse (II-II) winkelmäßig gegeneinander versetzt sind.

7. Dentale Untergruppe (1) nach einem der Ansprüche 1 bis 6, **dadurch gekennzeichnet, dass** der zweite Durchgang (8) des zweiten Elements (7) aufweist:
- einen Sitz (20) für den zweiten Schraubenkopf (21), der zum Einschrauben in das Zahnimplantat (2) das zweite Element (7) durchsetzen kann, während er im zweiten Durchgang (8) aufgenommen wird,
- ein distales Innengewinde (22), das in der Lage ist, eine dritte Schraube (23) aufzunehmen, welche die Befestigung eines provisorischen Transfixelements (24) am zweiten Element (7) ermöglicht.

8. Dentale Untergruppe (1) nach Anspruch 7, **dadurch gekennzeichnet, dass** sie mindestens ein provisorisches Transfixelement (24) umfasst, nämlich:
- ein Vernarbungsstück (25), dessen Seitenwand (25a) so angepasst ist, dass es zumindest teilweise mit dem Zahnfleisch in Kontakt kommt, und/oder
- ein Abdruckteil, das angepasst ist, intraoral gescannt und/oder mit einer Abdruckpaste übergossen zu werden, und/oder
- eine provisorische Zahnprothese.

9. Dentale Untergruppe (1) nach einem der Ansprüche 7 oder 8, **dadurch gekennzeichnet, dass** das provisorische Transfixelement (24) auf dem zweiten Element (7) rotierbar indexiert ist.

10. Zahnbaugruppe (27), aufweisend:
- ein erstes Element (3) für die einheitliche prothetische Restauration eines Zahns, das vom Typ einem Kern auf dem eine Schichtung ausgeführt ist oder vom Typ einem Keramikkern entspricht, wobei besagtes erstes Element (3) einen ersten Durchgang (4) hat, der einen ersten Durchgangsabschnitt (4a) aufweist, der sich von einem proximalen Ende (3a) des besagten ersten Elements (3) entlang einer ersten Längsachse (I-I) erstreckt, wobei das besagte erste Element (3) ein erstes axiales Halteorgan (6) aufweist,
- eine dentale Untergruppe (1) auf der besagtes erstes Element (3) zusammengebaut wird, wobei besagte dentale Untergruppe (1) selbst zur Aufnahme auf einem Zahnimplantat (2) angepasst ist und aufweist:
a. ein zweites Element (7) mit einem zweiten Durchgang (8), der sich entlang einer zweiten Längsachse (II-II) erstreckt, das eine Anlagefläche (9) aufweist, die so angepasst ist, dass sie das proximale Ende (3a) des besagten ersten Elements (3) mittels axialer Abstützung aufnehmen kann und ein proximales Ende (7a) aufweist, das so angepasst ist, dass es axial gegen das Zahnimplantat (2) zur Anlage kommen kann, oder so angepasst ist, dass es in dieses eindringen kann,
b. eine erste Befestigungsschraube (10), die einen ersten Schraubenkopf (10a) aufweist, von dem sich ein erster Schraubenschaft (10b) erstreckt, der in der Lage ist, durch das zweite Element (7) hindurchzugehen, während er im zweiten Durchgang (8) aufgenommen wird und mit einem Gewindeabschnitt (10c) versehen ist, der so angepasst ist, dass er durch Einschrauben in das besagte Zahnimplantat (2) aufgenommen werden kann, wobei der erste Durchgangsabschnitt (4a) des ersten Elements (3) so dimensioniert ist, dass er die Aufnahme des ersten Schraubenkopfes (10a) durch axiales Eindringen entlang der ersten Längsachse (I-I) von dem proximalen Ende (3a) des ersten Elements (3), ermöglicht
c. einen Ring (11), der so angepasst ist, dass er einen Sitz für den ersten Schraubenkopf (10a) bildet und mittels axialem Eindringen entlang der ersten Längsachse (I-I) im ersten Durchgangsabschnitt (4a) ausgehend vom proximalen Ende (3a) des besagten ersten Elements (3) bis zu einer vorab bestimmten axialen Position in dem besagten ersten Element (3) angebracht werden kann, in der die Verriegelungsmittel (12) der Verschiebung des Rings (11) zum proximalen Ende (3a) des besagten ersten Elements (3) entgegenwirken können,
wobei:
- das besagte zweite Element (7) mindestens ein zweites rotierbares Indexierungsorgan (13) und ein drittes rotierbares Indexierungsorgan (14) aufweist,
- der Ring (11) mindestens ein viertes rotierbares Indexierungsorgan (15) aufweist,
- das dritte (14) und das vierte (15) rotierbare Indexierungsorgan so angepasst sind, dass sie durch axiale Durchdringung entlang der zweiten Längsachse (II-II) sich gegenseitig ineinander verschränken, wenn das zweite Element (7) und der Ring (11) in einer relativen Eindringungausrichtung um die zweite Längsachse (II-II) sind, sodass in einer Verschränkungsposition das dritte (14) und das vierte (15) rotierbare Indexierungsorgan den Ring (11) bezüglich einer Rotation relativ zum zweiten Element (7) um die zweite Längsachse (II-II) blockieren,
- wobei das besagte erste Element (3) mindestens ein erstes rotierbares Indexierungsorgan (5) aufweist,
- das erste (5) und das zweite (13) rotierbare Indexierungsorgan so angepasst sind, dass sie durch axiale Durchdringung entlang der zweiten Längsachse (II-II) sich gegenseitig ineinander verschränken, wenn das besagte erste Element (3) und das zweite Element (7) in einer relativen Eindringungausrichtung um die zweite Längsachse (II-II) sind, sodass in einer Verschränkungsposition das erste (5) und das zweite (13) Indexierungsorgan das erste Element (3) in einer relativen Rotation relativ zum besagten zweiten Element (7) um die zweite Längsachse (II-II) blockieren,
- der erste Durchgangsabschnitt (4a) des besagten ersten Elements (3) so angepasst ist, dass der Ring (11) in seiner vorab bestimmten axialen Position um die erste Längsachse (I-I) in eine Verriegelungsausrichtung geschwenkt werden kann, in der das erste axiale Halteorgan (6) der Verschiebung des Rings (11) zum proximalen Ende (3a) des besagten ersten Elements (3) entgegenwirkt.

11. Zahnbaugruppe (27) nach Anspruch 10, **dadurch gekennzeichnet, dass**, wenn sich der Ring (11) nicht in der mindestens einen besagten Winkelausrichtung der Verriegelung befindet, die ersten (5), zweiten (13), dritten (14) und vierten (15) Indexierungsorgane axiale Begrenzungen bilden, die verhindern, dass die Anlagefläche (9) des zweiten Elements (7) axial gegen das proximale Ende (3a) des besagten ersten Elements (3) zur Anlage kommt.

12. Zahnbaugruppe (27) nach einem der Ansprüche 10 oder 11, **dadurch gekennzeichnet, dass** erste Reibungsmittel (16) es ermöglichen, das zweite Element (7) in das erste besagte Element (3) durch eine Reibungspassung, die eine Verschiebung des zweiten Elements (7) weg von dem besagten ersten Element (3) entlang der ersten Längsachse (I-I) bremst, einzupassen.

13. Zahnbaugruppe (27) nach einem der Ansprüche 10 bis 12, **dadurch gekennzeichnet, dass** das besagte erste rotierbare Indexierungsorgan (5) die Form einer Längsnut (5a-5c) hat, die in der Seitenwand des ersten Durchgangsabschnitts (4a) des besagten ersten Elements (3) ausgebildet ist und in die ein radialer Überstand (13a-13c), der das zweite rotierbare Indexierungsorgan (13) des besagten zweiten Elements (7) bildet, eingreifen kann, wenn die Anlagefläche (9) des zweiten Elements (7) das proximale Ende (3a) des besagten ersten Elements (3) mittels axialer Anlage aufnimmt.

14. Zahnbaugruppe (27) nach einem der Ansprüche 10 bis 13, **dadurch gekennzeichnet, dass**:
- das erste axiale Halteorgan (6) als Schulter (6a) im ersten Durchgangsabschnitt (4a) des besagten ersten Elements (3) ausgebildet ist,
- der Ring (11) einen radialen Vorsprung (11a-11c) am Umfang des Rings (11) umfasst, wobei der besagte radiale Vorsprung (11a-11c) an der Schulter (6a) anliegen kann, wenn der Ring (11) in Verriegelungsausrichtung ist.

15. Zahnbaugruppe (27) nach einem der Ansprüche 10 bis 14, **dadurch gekennzeichnet, dass** der erste Durchgang (4) außerdem einen zweiten Durchgangsabschnitt (4b) aufweist, wobei der besagte zweite Durchgangsabschnitt (4b) schräg zum ersten Durchgangsabschnitt (4a) verläuft, sodass der erste (4a) und der zweite (4b) Durchgangsabschnitt zwischen sich einen Winkel (A) ungleich Null bilden.

16. Verfahren zur Ex-vivo-Montage einer Zahnbaugruppe (27) nach einem der Ansprüche 10-15, umfassend die folgenden Schritte:
a) den Schaft (10b) der ersten Schraube (10) in den Ring (11) einführen,
b) den Ring (11) und den ersten Schraubenkopf (10a) durch eine axiale Translationsbewegung entlang der ersten Längsachse (I-I) vom proximalen Ende (3a) des ersten Elements (3) in den ersten Durchgangsabschnitt (4a) einführen, bis der Ring (11) die vorab bestimmte axiale Position erreicht,
c) den Ring (11) um die erste Längsachse (I-I) schwenken, um ihn in die Verriegelungsausrichtung zu bringen,
d) Befestigen des zweiten Elements (7) am proximalen Ende (3a) des ersten Elements (3), indem der erste Schraubenschaft (10b) in den zweiten Durchgang (8) eingreift, bis die Anlagefläche (9) des zweiten Elements (7) die Anlage am proximalen Ende (3a) des ersten Elements (3) erreicht.

## Claims

1. Dental sub-assembly (1) for the individual prosthetic restoration of a tooth, shaped to be received on a dental implant (2), said dental sub-assembly (1) being able to be assembled with a first element (3) of core type on which stratification is performed or of ceramic core type, said dental sub-assembly (1) including:
- a second element (7) with a second through-passage (8) extending along a second longitudinal axis (II-II), including a bearing surface (9) shaped to be able to receive in axial bearing abutment said first element (3) and including a proximal end (7a) shaped to be able to come to bear axially against or shaped to be able to come to penetrate into said dental implant (2),
- a first fastening screw (10) including a first screw head (10a) from which there extends a first screw shank (10b) able to pass through the second element (7), being received in the second through-passage (8) and having an externally-threaded section (10c) shaped to be received by screwing in said dental implant (2), the first screw head (10a) being sized so as to allow it to be received in said first element (3),
- a ring (11) shaped to form a seat for the first screw head (10a) and shaped to be mounted on and retained in said first element (3),
**characterized in that**:
- said second element (7) includes at least one second rotation indexing member (13) shaped to block rotation of said first element (3) relative to the second element (7) about the second longitudinal axis (II-II), and includes a third rotation indexing member (14),
- the ring (11) includes at least one fourth rotation indexing member (15),
- the third rotation indexing member (14) and the fourth rotation indexing member (15) are shaped to interlock by axial inter-penetration along the second longitudinal axis (II-II) when the second element (7) and the ring (11) are in a penetration orientation relative to one another about the second longitudinal axis (II-II), so that in an interlocked position the third rotation indexing member (14) and the fourth rotation indexing member (15) block rotation of the ring (11) relative to the second element (7) about the second longitudinal axis (II-II).

2. Dental sub-assembly (1) according to Claim 1, **characterized in that** the ring (11) is mounted such that it is captive on the shank (10b) of the first screw.

3. Dental sub-assembly (1) according to either of Claims 1 or 2, **characterized in that** the third rotation indexing member (14) and the fourth rotation indexing member (15) comprise:
- on one of either the ring (11) or the second element (7), at least one longitudinal fin (15a-15c),
- on the other of either the ring (11) or the second element (7), a cylindrical section (17) with a tubular lateral wall (17a) in which there is formed at least one longitudinal slot (14a-14c) able to receive said at least one longitudinal fin (15a-15c).

4. Dental sub-assembly (1) according to Claim 3, **characterized in that** said at least one second rotation indexing member (13) comprises a radial projection (13a-13c) at the periphery of a cylindrical section (17) of the second element (7).

5. Dental sub-assembly (1) according to Claim 4, **characterized in that** the ring (11) comprises a radial protuberance (11a-11c) at the periphery of the ring (11) .

6. Dental sub-assembly (1) according to any one of Claims 3 to 5, **characterized in that** on said second element (7) said radial projection (13a-13c) and said longitudinal slot (14a-14c) or longitudinal fin (15a-15c) are offset angularly relative to one another about the second longitudinal axis (II-II).

7. Dental sub-assembly (1) according to any one of Claims 1 to 6, **characterized in that** the second through-passage (8) of the second element (7) includes:
- a seat (20) for the head of a second screw (21) able to pass through the second element (7), being received in the second through-passage (8) so as to be screwed into the dental implant (2),
- a distal internal thread (22) able to receive a third screw (23) enabling the fixing to the second element (7) of a temporary through-fixed element (24).

8. Dental sub-assembly (1) according to Claim 7, **characterized in that** it comprises at least one temporary through-fixed element (24), namely:
- a healing part (25) the lateral wall (25a) of which is shaped to come at least in part into contact with the gum, and/or
- an impression-taking part shaped to be scanned intraorally and/or overmoulded in an impression-taking compound, and/or
- a temporary dental prosthesis.

9. Dental sub-assembly (1) according to either of Claims 7 or 8, **characterized in that** the temporary through-fixed element (24) is indexed in terms of rotation on the second element (7).

10. Dental component (27) including:
- a first element (3) for the individual prosthetic restoration of a tooth, of core type on which stratification is performed or of ceramic core type, said first element (3) having a first through-passage (4) including a first passage section (4a) extending from a proximal end (3a) of said first element (3) along a first longitudinal axis (I-I), said first element (3) including a first axial-retention member (6),
- a dental sub-assembly (1) onto which said first element (3) can be assembled, said dental sub-assembly (1) being itself shaped to be received on a dental implant (2) and including:
a. a second element (7) including a second through-passage (8) extending along a second longitudinal axis (II-II), including a bearing surface (9) shaped to be able to receive in axial bearing abutment the proximal end (3a) of said first element (3), and having a proximal end (7a) shaped to be able to come to bear axially against or shaped to be able to come to penetrate into said dental implant (2),
b. a first fastening screw (10) including a first screw head (10a) from which there extends a first screw shank (10b) able to pass through the second element (7), being received in the second through-passage (8) and having an externally-threaded section (10c) shaped to be received by screwing in said dental implant (2), the first passage section (4a) of the first element (3) being sized so as to allow the first screw head (10a) to be received by axial penetration along the first longitudinal axis (I-I) from the proximal end (3a) of the first element (3),
c. a ring (11) shaped to form a seat for the first screw head (10a) and to be mounted in said first element (3) by axial penetration along the first longitudinal axis (I-I) in the first passage section (4a) from the proximal end (3a) of said first element (3) to a predetermined axial position in which locking means (12) are able to oppose translational movement of the ring (11) in the direction of the proximal end (3a) of said first element (3),
wherein:
- said second element (7) includes at least one second rotation indexing member (13) and one third rotation indexing member (14),
- the ring (11) includes at least one fourth rotation indexing member (15),
- the third rotation indexing member (14) and the fourth rotation indexing member (15) are shaped to interlock by axial inter-penetration along the second longitudinal axis (II-II) when the second element (7) and the ring (11) are in a penetration orientation relative to one another about the second longitudinal axis (II-II) so that, in an interlocked position, the third rotation indexing member (14) and the fourth rotation indexing member (15) block rotation of the ring (11) relative to the second element (7) about the second longitudinal axis (II-II),
- said first element (3) includes at least one first rotation indexing member (5),
- the first rotation indexing member (5) and the second rotation indexing member (13) are shaped to interlock by axial inter-penetration along the second longitudinal axis (II-II) when said first element (3) and the second element (7) are in a penetration orientation relative to one another about the second longitudinal axis (II-II) so that in an interlocked position the first rotation indexing member (5) and the second rotation indexing member (13) block rotation of said first element (3) relative to the second element (7) about the second longitudinal axis (II-II),
- the first passage section (4a) of said first element (3) is shaped so that the ring (11), when in its predetermined axial position, can be pivoted about the first longitudinal axis (I-I) into a locking orientation in which the first axial-retention member (6) opposes translational movement of the ring (11) in the direction of the proximal end (3a) of said first element (3).

11. Dental component (27) according to Claim 10, **characterized in that** when the ring (11) is not in said at least one locking angular orientation the first indexing member (5), the second indexing member (13), the third indexing member (14) and the fourth indexing member (15) form axial abutments preventing the bearing surface (9) of the second element (7) from coming to bear axially against the proximal end (3a) of said first element (3).

12. Dental component (27) according to either of Claims 10 or 11, **characterized in that** first friction means (16) enable a friction fit of the second element (7) in said first element (3) slowing translational movement of the second element (7) away from said first element (3) along the first longitudinal axis (I-I).

13. Dental component (27) according to any one of Claims 10 to 12, **characterized in that** said first rotation indexing member (5) is in the form of a longitudinal groove (5a-5c) formed in the lateral wall of the first passage section (4a) of said first element (3) and in which a radial projection (13a-13c) forming the second rotation indexing member (13) of the second element (7) can be engaged when the bearing surface (9) of the second element (7) receives in axial bearing abutment the proximal end (3a) of said first element (3) .

14. Dental component (27) according to any one of Claims 10 to 13, **characterized in that**:
- the first axial-retention member (6) is in the form of a shoulder (6a) in the first passage section (4a) of said first element (3),
- the ring (11) includes a radial protuberance (11a-11c) at the periphery of the ring (11), said radial protuberance (11a-11c) being able to bear against the shoulder (6a) when the ring (11) is in the locking orientation.

15. Dental component (27) according to any one of Claims 10 to 14, **characterized in that** the first through-passage (4) further includes a second passage section (4b), said second passage section (4b) obliquely extending the first passage section (4a) so that the first passage section (4a) and the second passage section (4b) form a non-zero angle (A) between them.

16. Method for ex-vivo assembly of a dental component (27) according to any one of Claims 10 to 15, comprising the following steps:
a) inserting the shank (10b) of the first screw (10) in the ring (11),
b) inserting the ring (11) and the first screw head (10a) in the first passage section (4a) by axial translational movement along the first longitudinal axis (I-I) from the proximal end (3a) of the first element (3) until the ring (11) reaches the predetermined axial position,
c) causing the ring (11) to pivot about the first longitudinal axis (I-I) to bring it into the locking orientation,
d) mounting the second element (7) on the proximal end (3a) of the first element (3) by engaging the shank (10b) of the first screw in the second through-passage (8) until the bearing surface (9) of the second element (7) is brought to bear against the proximal end (3a) of the first element (3).
